# EUROPEAN PATENT APPLICATION

(11) **EP 4 707 315 A1**
(43) Date of publication of application: **11.03.2026**
(21) Application number: 24814561.7
(22) Date of filing: 30.05.2024
(51) Int. Cl.: C08F 230/08, C08F 226/10, C08F 220/06, C08F 220/56, C08F 220/28, D21H 17/34, D21H 19/20, D21H 21/14, D21H 21/16, C09D 143/04

(54) **COPOLYMER, COMPOSITION AND USE THEREOF**

(30) Priority: 02.06.2023 CN 202310652456; 06.06.2023 CN 202310666493; 09.06.2023 CN 202310686746
(71) Applicant: Beijing Mapu New Materials Co., Ltd., Beijing 100192 (CN)
(72) Inventor: JIANG, Lingfei, Beijing 100192 (CN); LI, Jiaoli, Beijing 100192 (CN); KONG, Xiangjing, Beijing 100192 (CN)
(74) Representative: Ran, Handong
(86) International application number: PCT/CN2024/096498
(87) International publication number: WO 2024/245366

(57) **Abstract**

The present application relates to a copolymer, a composition comprising the copolymer, and a product treated with same. The copolymer comprises a repeating unit generated by a monomer I, a repeating unit generated by a monomer II and a repeating unit generated by a monomer III. The copolymer or composition comprising the copolymer can treat a plurality of articles in sizing, coating or soaking environments having a wider pH value range (acidic, neutral and alkaline), especially being alkaline, and impart oil-repellent and water-repellent functions to the articles.

## Description

### CROSS-REFERENCE TO RELATED APPLICATIONS

The present application claims the priority benefits of the following three Chinese patent applications: Chinese patent application with application number 202310652456.5 filed on June 2, 2023, titled "Copolymer, composition and use thereof"; Chinese patent application with application number 202310666493.1 filed on June 6, 2023, titled "Copolymer, composition and use thereof"; and Chinese patent application with application number 202310686746.1 filed on June 9, 2023, titled "Copolymer, treatment agent and water- and oil-repellent product"; the entire contents of the above three patent applications are incorporated into this application as a whole.

### TECHNICAL FIELD

The present application relates to a copolymer, a composition comprising the copolymer, and use thereof, which can be used for surface treatment of various articles, such as fiber fabrics, leather, non-woven fabrics, fur, concrete, natural stone, paper products or plastics.

### BACKGROUND

Treating articles to give them some functions, such as making their surfaces water-repellent and oil-repellent, so that the items can acquire new functions and extend their service life. There are usually several methods for treatment agents that change the surface properties of articles. Applying a layer of film-forming resin on the surface to transform the surface into a coating with resin functions is a common method, but this method often changes the properties of the item itself. For example, for the surface treatment of porous objects, the film-forming coating will change the air permeability and appearance of the item itself, which is not acceptable. For instance, people often hope to endow the surface of porous articles like fiber fabrics, natural stones, leather, and paper with new functions while preserving their appearance and fundamental properties.

Silicone copolymers are widely used compounds renowned for their excellent properties, high inertness, and safety. Patent CN100300612 describes a silicone oxide copolymer that can be applied to paper processing to impart water-repellent and oil-repellent properties. However, this copolymer relies on a coating method that requires film formation, resulting in a relatively complex manufacturing process.

CN114573768B describes an organosilicon copolymer, which can be used for the treatment of articles. The copolymer is a cationic copolymer, which has certain limitations in use, especially in alkaline environment where it may fail.

In modern industrial uses, alkaline environments, particularly those with high pH levels, are more common. For example, in the modern papermaking industry, alkaline papermaking is the mainstream process. For example, in the leather taning process, alkaline environments are more common. Another example is the treatment of stone. Since marble is mainly composed of calcium carbonate, it will react with acid, so it is particularly important to ensure that the chemical still maintains its function in alkaline conditions. Therefore, it is necessary to develop a treatment agent that is suitable for a wider range of pH values.

### SUMMARY

The present application aims to provide a copolymer and a composition comprising the copolymer, which can be used in a wider pH range to treat porous articles, thereby imparting oil- and water-repellent properties to the surface of the articles.

In the first aspect, the present application provides a copolymer, comprising a repeating unit generated by monomer I, a repeating unit generated by monomer II, and a repeating unit generated by monomer III, wherein
a) a general formula of monomer I is as shown in formula I:

   M-Z, or Z-M-Z formula I

   wherein, M comprises a polymerizable functional group;
   Z is selected from the following structures, 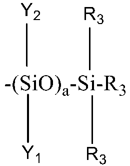
   in Z, each R₃ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₄-O-R₅-, wherein R₄ is C₁-C₂₀ alkyl, C₆-C₂₀ aryl, C₇-C₁₂ aralkyl, or C₇-C₁₂ alkylaryl, R₅ is C₁-C₂₀ alkylene, and 1≤a≤200;
   Y₁ and Y₂ are the same or different, each independently selected from the group consisting of C₁-C₂₀ alkyl, C₆-C₂₀ aryl, C₇-C₁₂ aralkyl, C₇-C₁₂ alkylaryl, and a structure as shown in formula (1): 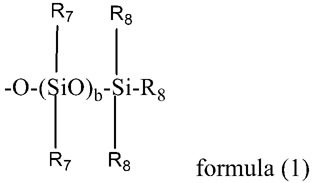
   each R₇ is independently selected from the group consisting of C₁-C₂₀ alkyl, C₆-C₂₀ aryl, C₇-C₁₂ aralkyl, and C₇-C₁₂ alkylaryl; each R₈ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₉-O-R₁₀-, wherein R₉ is C₁-C₂₀ alkyl, C₆-C₂₀ aryl, C₇-C₁₂ aralkyl, or C₇-C₁₂ alkylaryl, R₁₀ is C₁-C₂₀ alkylene, 0≤b≤200;
b) a general formula of monomer II is as shown in formula II-1, formula II-2, or formula II-3:

   CH₂=C(R₁)-G-(R₂O)_{q}-R₃ II-1

   in formula II-1, R₁ represents a hydrogen atom, or methyl, each R₂ is independently C₁-C₆ alkylene, q is an integer of 1 to 50; R₃ represents a hydrogen atom, or C₁-C₂₀ alkyl;
   wherein, G is selected from the group consisting of the groups represented by groups G-1 or represented by G-2,

      -C(O)-O-B- G-1

      -C(O)-N(R₄)-B- G-2
   R₄ represents a hydrogen atom, or methyl, B is absent or B is C₁-C₂₀ alkylene; 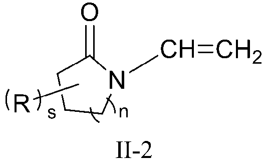
   in formula II-2, n is an integer of 1 to 6, s is an integer of 0 to 16, each R are the same or different, and independently selected from the group consisting of C₁-C₂₀ alkyl, preferably C₁-C₁₀ alkyl, more preferably C₁-C₆ alkyl;

      CH₂=C(R₁)-C(O)-N(R₂R₃) II-3
   in formula II-3, R₁ is selected from the group consisting of a hydrogen atom, and C₁-C₂₀ alkyl;
   R₂ and R₃ are independently selected from the group consisting of hydrogen atom, and C₁-C₂₀ alkyl; or R₂ and R₃ are jointed and, together with the nitrogen atom they are attached to, form C₃-C₈ heterocyclic group;
c) monomer III is a monomer having an anion-supplying group and a polymerizable unsaturated group, wherein the anion-supplying group is a carboxyl group, or a sulfonic acid group.

The inventor of the present application unexpectedly discovered that copolymers obtained by polymerizing monomer I, monomer II, and monomer III can be used to treat various articles such as paper products in a wider range of pH values (acidic, neutral, and alkaline), especially in alkaline sizing, coating, and pulp addition, without changing the basic properties of the articles, endowing them with excellent oil- and water-repellent properties.

In some embodiments, in formula II-1, R₂ is C₂-C₄ alkylene. In some embodiments, in formula II-1, q is 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, or 49. In some embodiments, in formula II-1, q is an integer of 1 to 20.

In some embodiments, in formula II-1, R₃ is a hydrogen atom, or C₁-C₁₀ alkyl, for example R₃ is a hydrogen atom, C₁-C₃ alkyl, or C₄-C₆ alkyl.

In some embodiments, in the groups shown by G-1 and G-2, B is absent or is C₁-C₁₀ alkylene, for example B is C₁-C₃ alkylene, or C₄-C₆ alkylene.

In some embodiments, monomer II is one or more selected from the group consisting of 2-hydroxyethyl methacrylate, 2-hydroxypropyl methacrylate, 2-hydroxybutyl methacrylate, 4-hydroxybutyl methacrylate, poly(ethylene glycol) mono(meth)acrylate, poly(propylene glycol) mono(meth)acrylate, and methoxypolyethylene glycol (methyl) acrylate.

In some embodiments, in formula II-2, n is 1, 2, 3, 4, 5, or 6.

In some embodiments, in formula II-2, s is 0, 1, 2, 3, 4, 5, 6, 7, 8, 9, 10, 11, 12, 13, 14, 15, or 16.

In some embodiments, in formula II-2, each R are the same or different, and independently selected from the group consisting of C₁-C₆ alkyl, for example C₁-C₃ alkyl, and C₄-C₆ alkyl.

In some embodiments, monomer II has a structure as shown in formula II-2-1:

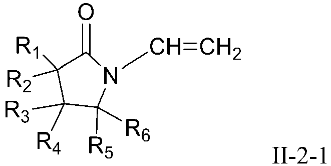

In formula II-2-1, R₁ to R₆ are independently selected from the group consisting of a hydrogen atom and C₁-C₂₀ alkyl, preferably selected from the group consisting of hydrogen atom, and C₁-C₁₀ alkyl, more preferably selected from the group consisting of hydrogen atom, and C₁-C₆ alkyl such as C₁-C₃ alkyl, or C₄-C₆ alkyl.

In some embodiments, in formula II-2-1, one or two or three of R₁ to R₆ are independently selected from the group consisting of hydrogen atom, and C₁-C₆ alkyl such as C₁-C₃ alkyl, or C₄-C₆ alkyl, and the others of R₁ to R₆ are hydrogen atoms.

In some embodiments, the general formula of monomer II is as shown in formula II-2-2: 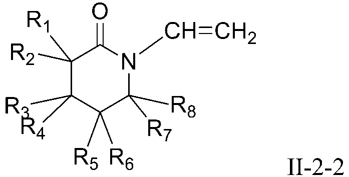 in formula II-2-2, R₁ to R₈ are independently selected from the group consisting of a hydrogen atom, and C₁-C₂₀ alkyl, preferably selected from the group consisting of a hydrogen atom, and C₁-C₁₀ alkyl, more preferably selected from the group consisting of hydrogen atom, and C₁-C₆ alkyl such as C₁-C₃ alkyl, or C₄-C₆ alkyl.

In some embodiments, in formula II-2-2, one or two or three of R₁ to R₈ are independently selected from the group consisting of a hydrogen atom, and C₁-C₆ alkyl, such as C₁-C₃ alkyl, C₄-C₆ alkyl, and the others of R₁ to R₈ are hydrogen atoms.

In some embodiments, the general formula of monomer II is as shown in formula II-2-3: 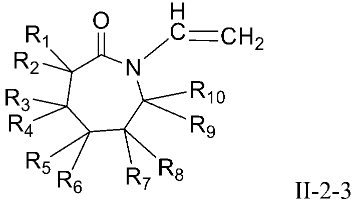 in formula II-2-3, R₁ to R₁₀ are independently selected from the group consisting of hydrogen atom, and C₁-C₂₀ alkyl, preferably selected from the group consisting of hydrogen atom, and C₁-C₁₀ alkyl, more preferably selected from the group consisting of hydrogen atom, and C₁-C₆ alkyl, such as C₁-C₃ alkyl, or C₄-C₆ alkyl.

In some embodiments, in formula 11-2-3, one or two or three of R₁ to R₁₀ are independently selected from the group consisting of hydrogen atom, and C₁-C₆ alkyl, such as C₁-C₃ alkyl, C₄-C₆ alkyl, and the others of R₁ to R₁₀ are hydrogen atoms.

In some embodiments, the general formula of monomer II is as shown in formula II-2-4: 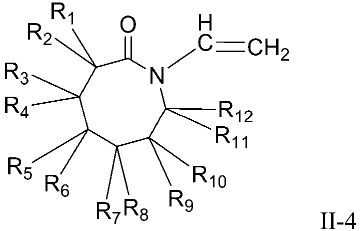 in formula II-2-4, R₁ to R₁₂ are independently selected from the group consisting of hydrogen atom, and C₁-C₂₀ alkyl, preferably selected from the group consisting of hydrogen atom, and C₁-C₁₀ alkyl, more preferably selected from the group consisting of hydrogen atom, and C₁-C₆ alkyl such as C₁-C₃ alkyl, or C₄-C₆ alkyl.

In some embodiments, in formula II-2-4, one or two or three of R₁ to R₁₂ are independently selected from the group consisting of hydrogen atom, and C₁-C₆ alkyl such as C₁-C₃ alkyl, or C₄-C₆ alkyl, and the others of R₁ to R₁₂ are hydrogen atoms.

In some embodiments, the general formula of monomer II is as shown in formula II-2-5: 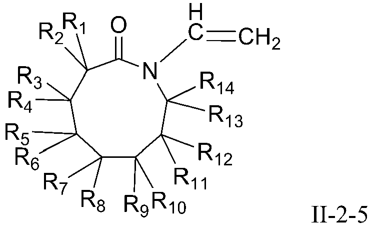 in formula II-2-5, R₁ to R₁₄ are independently selected from the group consisting of hydrogen atom, and C₁-C₂₀ alkyl, preferably selected from the group consisting of hydrogen atom, and C₁-C₁₀ alkyl, more preferably selected from the group consisting of hydrogen atom, and C₁-C₆ alkyl, such as C₁-C₃ alkyl, or C₄-C₆ alkyl.

In some embodiments, in formula II-2-5, R₁ to R₁₄ are independently selected from the group consisting of hydrogen atom, and C₁-C₆ alkyl, such as C₁-C₃ alkyl, or C₄-C₆ alkyl, and the others of R₁ to R₁₄ are hydrogen atoms.

In some embodiments, the general formula of monomer II is as shown in formula II-2-6: 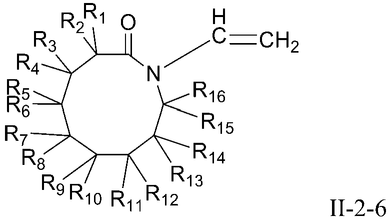 in formula II-2-6, R₁ to R₁₆ are independently selected from the group consisting of hydrogen atom, and C₁-C₂₀ alkyl, preferably selected from the group consisting of hydrogen atom, and C₁-C₁₀ alkyl, more preferably selected from the group consisting of hydrogen atom, and C₁-C₆ alkyl, such as C₁-C₃ alkyl, or C₄-C₆ alkyl.

In some embodiments, in formula II-2-6, one or two or three of R₁ to R₁₆ are independently selected from the group consisting of hydrogen atom, and C₁-C₆ alkyl, such as C₁-C₃ alkyl, or C₄-C₆ alkyl, and the others of R₁ to R₁₆ are hydrogen atoms.

In some embodiments, monomer II is one or more selected from the group consisting of N-vinyl-2-pyrrolidone, N-vinyl-3-methyl-2-pyrrolidone, N-vinyl-4-methyl-2-pyrrolidone, N-vinyl-5-methyl-2-pyrrolidone, N-vinyl-3,3-dimethyl-2-pyrrolidone, N-vinyl-5-ethyl-2-pyrrolidone, N-vinyl-3-ethylpyrrolidone, N-vinyl-4,5-dimethyl pyrrolidone, N-vinyl-5,5-dimethyl pyrrolidone, N-vinyl-3,3,5-trimethylpyrrolidone, N-vinyl-5-methyl-5-ethylpyrrolidone, N-vinyl-3,4,5-trimethyl-3-ethylpyrrolidone, N-vinyl-5-ethyl-2-pyrrolidone, N-vinyl-3-ethylpyrrolidone, N-vinyl-4,5-dimethyl pyrrolidone, N-vinyl-5,5-dimethyl pyrrolidone, N-vinyl-3,3,5-trimethylpyrrolidone, N-vinyl-5-methyl-5-ethylpyrrolidone, N-vinyl-3,4,5-trimethyl-3-ethylpyrrolidone, N-vinyl-2-piperidone, N-vinyl-3-methylpiperidone, N-vinyl-3-methylcaprolactam, N-vinyl-4-methylpiperidone, N-vinyl-4-methylcaprolactam, N-vinyl-4-methylpiperidone, N-vinyl-6-methyl-2-piperidone, N-vinyl-6-ethyl-2-piperidone, N-vinyl-3,5-dimethyl -2-piperidone, N-vinyl-4,4-dimethyl-2-piperidone, N-vinyl-2-caprolactam, N-vinyl-7-methyl caprolactam, N-vinyl-7-ethyl caprolactam, N-vinyl-3,5-dimethyl caprolactam, N-vinyl-4,6-dimethyl caprolactam, N-vinyl-3,5,7-trimethyl caprolactam, N-vinyl-2-valerolactam, N-vinylhexahydro-2-azacycloheptanone, N-vinyloctahydro-2-azacyclooctanone, N-vinyloctahydro-2-azacyclononanone, and N-vinyldecahydro-2-azacyclodecanone.

In some embodiments, in formula II-3, R₁ is selected from the group consisting of hydrogen atom, and C₁-C₁₀ alkyl. In some embodiments, in formula II-3, R₁ is selected from the group consisting of hydrogen atom, and C₁-C₆ alkyl, such as C₁-C₃ alkyl, or C₄-C₆ alkyl. In some embodiments, R₁ preferably is selected from the group consisting of hydrogen atom, and methyl.

In some embodiments, in formula II-3, R₂ and R₃ are independently selected from the group consisting of hydrogen atom, and C₁-C₁₀ alkyl. In some embodiments, in formula II-3, R₂ and R₃ are independently selected from the group consisting of hydrogen atom, and C₁-C₆ alkyl, such as C₁-C₃ alkyl, or C₄-C₆ alkyl.

In some embodiments, in formula II-3, R₂ and R₃ are jointed and, together with the nitrogen atom they are attached to, form C₃-C₈ azacycloalkyl.

In some embodiments, in formula II-3, R₂ and R₃, together with the nitrogen atom they are attached to, form pyrrolidone, piperidinyl, pyrrolidinyl, pyrrolyl, piperidone group, morpholinyl, piperazinyl, aziridinyl, azetidinyl, azepanyl, or azacyclooctyl.

In some embodiments, monomer II is one or more selected from the group consisting of acrylamide, methylacrylamide, N-methyl acrylamide, N-ethyl acrylamide, N-propylacrylamide, N-isopropylacrylamide, N-butyl acrylamide, N-methyl methyl acrylamide, N-ethyl methyl acrylamide, N-propyl methyl acrylamide, N-isopropyl methyl acrylamide, N,N-dimethyl(methyl) acrylamide, N,N- diethyl(methyl)acrylamide, N,N-diisopropyl(methyl) acrylamide, N-butyl methyl acrylamide, N-(methyl)acroloylpyrrolidone, N-(methyl)acroloylpiperidine, N-(methyl)acryloylpyrrolidine, N-(methyl)acryloylpyrrole, N-(methyl)acroloylpiperidone, N-(methyl)acroloylmorpholine, N-(methyl)acryloylpiperazine, N-(methyl)acroloylaziridine, N-(methyl)acroloylazetidine, N-(methyl)acroloyl azacycloheptane, and N-(methyl)acroloyl azacyclooctane.

In some embodiments, in monomer III, the polymerizable unsaturated group is selected from groups containing a carbon-carbon double bond.

In some embodiments, monomer III is selected from the group consisting of methylacrylic acid, crotonic acid, maleic acid, fumaric acid, itaconic acid, citraconic acid, 2-acrylamide-2-methyl propanesulfonic acid, vinylsulfonic acid, (meth)allylsulfonic acid, styrenesulfonic acid, vinylbenzenesulfonic acid, acrylamide tertiary butyl sulfoacid, and salts thereof.

In some embodiments, in M, the polymerizable functional group is selected from groups containing a carbon-carbon double bond.

In some embodiments, in formula I, M is as shown in formula I-1:

CH₂=C(R₁)-X-B- I-1

in formula I-1, R₁ is selected from the group consisting of hydrogen atom, and C₁-C₂₀ alkyl; B is C₁-C₂₀ alkylene,
X is selected from the group consisting of groups as shown in X-1 and X-2,

   -C(O)-O- X-1

   -C(O)-N(R₂)- X-2
R₂ is selected from the group consisting of hydrogen atom, and C₁-C₂₀ alkyl;

In some embodiments, in formula I-1, R₁ is selected from the group consisting of hydrogen atom, and C₁-C₁₀ alkyl, such as C₁-C₃ alkyl, C₄-C₆ alkyl, or C₈-C₁₀ alkyl. In some embodiments, in formula I-1, B is C₁-C₁₀ alkylene, such as C₁-C₃ alkylene, C₄-C₆ alkylene, or C₈-C₁₀ alkylene.

In some embodiments, in the groups as shown in X-1 and X-2, R₂ is selected from the group consisting of hydrogen atom, and C₁-C₁₀ alkyl, such as C₁-C₃ alkyl, C₄-C₆ alkyl, or C₈-C₁₀ alkyl.

In some embodiments, in formula I-1, R₁ is selected from the group consisting of hydrogen atom, and methyl; B is C₁-C₆ alkylene; in X, R₂ is selected from the group consisting of hydrogen atom, and methyl.

In some embodiments, in formula I, M is as shown in formula I-2:

CH₂=C(R₁)-W-B- I-2

in formula I-2, R₁ is selected from the group consisting of hydrogen atom, and C₁-C₂₀ alkyl;
W is selected from the group consisting of groups as shown in W-1, W-2, W-3 and W-4,

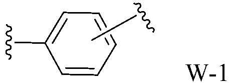

   -O-C(O)-N(R₂)- W-2

   -O-C(O)-O- W-3

   -O-C(O)-O-D-N(R₂)- W-4
R₂ is selected from the group consisting of hydrogen atom, and C₁-C₂₀ alkyl, D is C₁-C₂₀ alkylene; when W is selected from W-1, B is absent or B is C₁-C₂₀ alkylene, and when W is selected from the group consisting of W-2, W-3, and W-4, B is C₁-C₂₀ alkylene.

In some embodiments, in formula I-2, R₁ is selected from the group consisting of hydrogen atom, and C₁-C₁₀ alkyl, such as C₁-C₃ alkyl, C₄-C₆ alkyl, or C₈-C₁₀ alkyl. In some embodiments, in formula I-2, B is C₁-C₁₀ alkylene, such as C₁-C₃ alkylene, C₄-C₆ alkylene, or C₈-C₁₀ alkylene.

In some embodiments, in formula I-2, R₂ is selected from the group consisting of hydrogen atom, and C₁-C₁₀ alkyl, such as C₁-C₃ alkyl, C₄-C₆ alkyl, or C₈-C₁₀ alkyl. In some embodiments, in formula I-2, D is C₁-C₁₀ alkylene, such as C₁-C₃ alkylene, C₄-C₆ alkylene, or C₈-C₁₀ alkylene.

In some embodiments, in formula I-2, R₁ and R₂ are selected from the group consisting of hydrogen atom, and methyl, B and D are C₁-C₆ alkylene.

In some embodiments, when W is selected from W-1, B is absent or is C₁-C₁₀ alkylene, such as C₁-C₃ alkylene, C₄-C₆ alkylene, or C₈-C₁₀ alkylene.

In some embodiments, when W is selected from the group consisting of W-2, W-3, and W-4, B is C₁-C₁₀ alkylene, such as C₁-C₃ alkylene, C₄-C₆ alkylene, or C₈-C₁₀ alkylene.

In some embodiments, in formula I, M is as shown in formula 1-3: 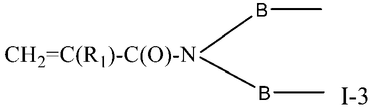 in formula I-3, R₁ is selected from the group consisting of hydrogen atom, and C₁-C₂₀ alkyl, and B is independently C₁-C₂₀ alkylene.

In some embodiments, in formula I-3, R₁ is selected from the group consisting of hydrogen atom, and C₁-C₁₀ alkyl, such as C₁-C₃ alkyl, C₄-C₆ alkyl, or C₈-C₁₀ alkyl. In some embodiments, in formula I-3, B is C₁-C₁₀ alkylene, such as C₁-C₃ alkylene, C₄-C₆ alkylene, or C₈-C₁₀ alkylene.

In some embodiments, in formula I-3, R₁ is selected from the group consisting of hydrogen atom, and methyl.

In some embodiments, in Z, each R₃ is independently C₁-C₁₀ alkyl, C₆-C₁₀ aryl, C₇-C₁₂ aralkyl, C₇-C₁₂ alkylaryl, C₁-C₁₀ alkoxy, or group R₄-O-R₅-, R₄ is C₁-C₁₀ alkyl, C₆-C₁₀ aryl, C₇-C₁₂ aralkyl, or C₇-C₁₂ alkylaryl, R₅ is C₁-C₁₀ alkylene, 1≤a≤100; each R₇ is independently C₁-C₁₀ alkyl, C₆-C₁₀ aryl, C₇-C₁₂ aralkyl, or C₇-C₁₂ alkylaryl; each R₈ is independently C₁-C₁₀ alkyl, C₆-C₁₀ aryl, C₇-C₁₂ aralkyl, C₇-C₁₂ alkylaryl, C₁-C₁₀ alkoxy, or group R₉-O-R₁₀-, wherein R₉ is C₁-C₁₀ alkyl, C₆-C₁₀ aryl, C₇-C₁₂ aralkyl, or C₇-C₁₂ alkylaryl, R₁₀ is C₁-C₁₀ alkylene, 0≤b≤100.

In some embodiments, in Z, each R₃ is independently C₁-C₆ alkyl, C₆-C₁₀ aryl, C₇-C₁₀ aralkyl, C₇-C₁₀ alkylaryl, C₁-C₆ alkoxy or group R₄-O-R₅-, R₄ is C₁-C₆ alkyl, C₆-C₁₀ aryl, C₇-C₁₀ aralkyl, or C₇-C₁₀ alkylaryl, R₅ is C₁-C₆ alkylene, 1≤a≤30; each R₇ is independently C₁-C₆ alkyl, C₆-C₁₀ aryl, C₇-C₁₀ aralkyl, or C₇-C₁₀ alkylaryl; each R₈ is independently C₁-C₆ alkyl, C₆-C₁₀ aryl, C₇-C₁₀ aralkyl, C₇-C₁₀ alkylaryl, C₁-C₆ alkoxy, or group R₉-O-R₁₀-, wherein R₉ is C₁-C₆ alkyl, C₆-C₁₀ aryl, C₇-C₁₀ aralkyl, or C₇-C₁₀ alkylaryl, R₁₀ is C₁-C₁₆ alkylene, 0≤b≤30.

In some embodiments, a is an integer of 1 to 80, an integer of 1 to 30, an integer of 1 to 20, or an integer of 1 to 10.

In some embodiments, b is 0. In some embodiments, b is an integer of 1 to 30, an integer of 1 to 20, an integer of 1 to 10, or an integer of 1 to 5.

In some embodiments, each Z is independently one or more selected from the group consisting of the following structures as shown in structures i-1 to i-6: 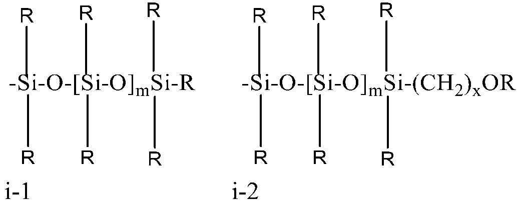 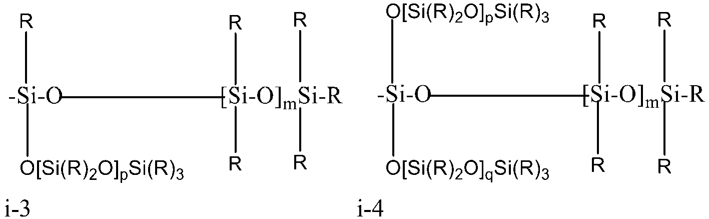 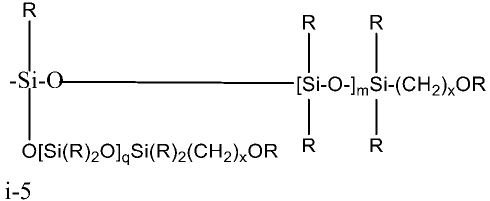 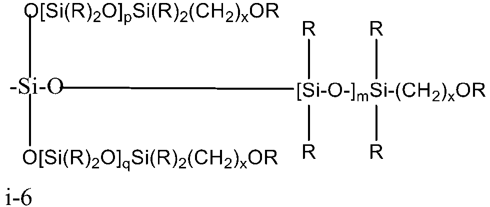
each R is independently selected from the group consisting of C₁-C₁₀ alkyl, C₆-C₁₀ aryl, C₇-C₁₂ aralkyl, and C₇-C₁₂ alkylaryl;
1≤m+1≤60, preferably, 1≤m+1≤30; 0≤p≤60, preferably, 0≤p≤30; 0≤q≤60, preferably, 0≤q≤30; 1≤x≤9, preferably, 1≤x≤7, each x can be the same or different.

In some embodiments, R is C₁-C₃ alkyl, such as methyl.

In some embodiments, Z is one or more selected from 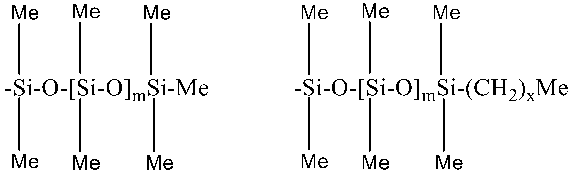 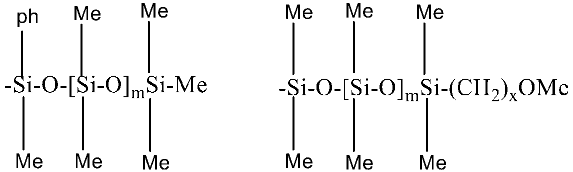 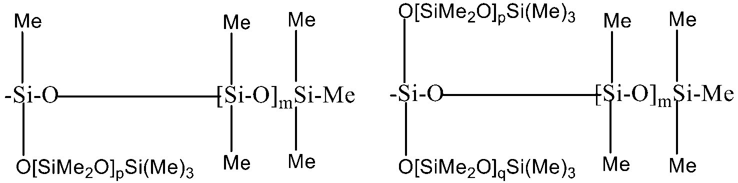 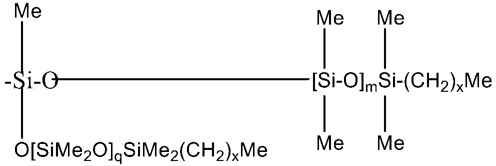 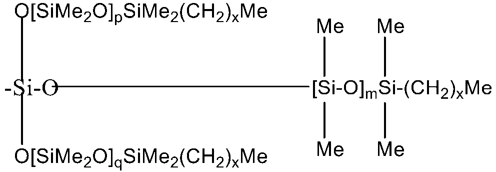 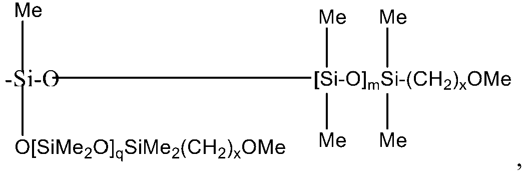 and 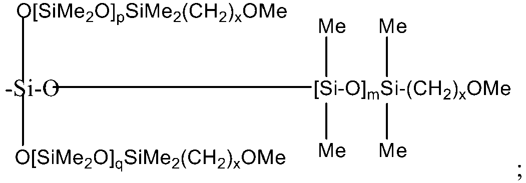
each R is independently selected from the group consisting of C₁-C₁₀ alkyl, C₆-C₁₀ aryl, C₇-C₁₂ aralkyl, and C₇-C₁₂ alkylaryl;
Me represents methyl, ph represents phenyl; 1≤m+1≤60, preferably, 1≤m+1≤30; 0≤p≤60, preferably, 0≤p≤30; 0≤q≤60, preferably, 0≤q≤30; 1≤x≤9, preferably, 1≤x≤7, each x can be the same or different.

In some embodiments, m is 0, 1, 2, 3, 4, 5, 6, 7, 8, or 9.

In some embodiments, x is 1, 2, 3, 4, 5, 6, or 7.

In some embodiments, monomer I is selected from the group consisting of
CH₂=C(CH₃)C(O)-O-(CH₂)₃Si(OSi(CH₃)₃)₃;
CH₂=CHC(O)-O-(CH₂)₃Si(OSi(CH₃)₃)₃;
CH₂=C(CH₃)C(O)-O-(CH₂)₃Si(CH₃)(OSi(CH₃)₃)₂;
CH₂=CHC(O)-O-(CH₂)₃Si(CH₃)(OSi(CH₃)₃)₂;
CH₂=C(CH₃)C(O)-NH-(CH₂)₃Si(OSi(CH₃)₃)₃;
CH₂=CHC(O)-NH-(CH₂)₃Si(OSi(CH₃)₃)₃ ;
CH₂=C(CH₃)C(O)-NH-(CH₂)₃Si(CH₃)(OSi(CH₃)₃)₂;
CH₂=CHC(O)-NH-(CH₂)₃Si(CH₃)(OSi(CH₃)₃)₂ ;
CH₂=C(CH₃)C(O)-O-(CH₂)₃Si(OSi(CH₂CH₃)₃)₃;
CH₂=CHC(O)-O-(CH₂)₃Si(OSi(CH₂CH₃)₃)₃;
CH₂=C(CH₃)C(O)-O-CH₂-Si(OSi(CH₃)₃)₃;
CH₂=C(CH₃)C(O)-O-(CH₂)₃Si(CH₃)[O-[Si(CH₃)₂O]n-Si(CH₃)₂C₄H₉]₂, 0≤n≤25;
CH₂=C(CH₃)C(O)-O-(CH₂)_{3[}Si(CH₃)₂O]n-Si(CH₃)₂C₄H₉, 1≤n≤25;
CH₂=C(CH₃)C(O)-O-(CH₂)₃[Si(CH₃)₂O]n-Si(CH₃)₂C₈H₁₇, 1≤n≤25;
CH₂=C(CH₃)C(O)-O-(CH₂)_{3[}Si(CH₃)₂O]n-Si(CH₃)₃, 1≤n≤25;
CH₂=CH-ph-Si(OSi(CH₃)₃)₃ (ph represents 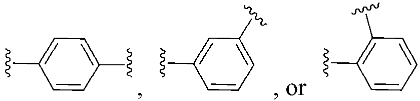 );
CH₂=CH-ph-(CH₂)₂Si(OSi(CH₃)₃)₃ (ph represents 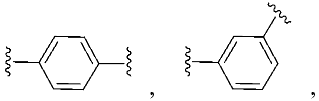 or 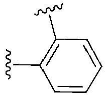 ); CH₂=CH-ph-(CH₂)₃[Si(CH₃)₂O]n-Si(CH₃)₂C₄H₉ (C₄H₉ represents butyl, ph represents 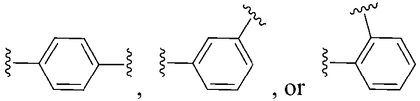 ), 1≤n≤25;
CH₂=CH-O-C(O)-NH-(CH₂)₃Si(OSi(CH₃)₃)₃; CH₂=CH-O-C(O)-NH-(CH₂)₃-[Si(CH₃)₂O]n-Si(CH₃)₂C₄H₉(C₄H₉ represents butyl), 1≤n≤25;
CH₂=CH-O-C(O)-O-(CH₂)₃-Si(OSi(CH₃)₃)₃;CH₂=CH-O-C(O)-O-(CH₂)₃-[Si(CH₃)₂O]n-Si( CH₃)₂C₄H₉(C₄H₉ represents butyl), 1≤n≤25; CH₂=CH-O-C(O)-O-(CH₂)₂-NH-(CH₂)₃Si(OSi(CH₃)₃)₃;
CH₂=CH-O-C(O)-O-(CH₂)₂-NH-(CH₂)₃[SiCCH₃)₂O]n-Si(CH₃)₂C₄H₉(C₄H₉ represents butyl), 1≤n≤25;
CH₂=CH-C(O)-N[-(CH₂)₃-Si(OSi(CH₃)₃)₃]₂;
CH₂=CH-C(O)-N[-(CH₂)₃-Si(CH₃)(OSi(CH₃)₃)₂]₂;
CH₂=CH-C(O)-N[-(CH₂)₃-(Si(CH₃)₂o)ₙ-Si(CH₃)₂C₄H₉]₂(C₄H₉represents butyl), 1≤n≤25; and
CH₂=C(CH₃)-C(O)-N[-(CH₂)₃-(Si(CH₃)₂O),-Si(CH₃)₂C₄H₉]₂(C₄H₉ represents butyl), 1≤n≤25.

**In** some embodiments, monomer I comprises silicon monomer I-A and/or silicon monomer I-B;
silicon monomer I-A has the same general formula as formula I, and satisfies the condition that when a is 1, Y₁ and/or Y₂ is of the structure of formula (1), and when a is lager than 1 and ≤200, at least one Y₁ is of the structure of formula (1) and/or at least one Y₂ is of the structure of formula (1);
silicon monomer I-B has the general formula as formula I, and satisfies the condition that Y₁ and Y₂ are the same or different, independently selected from the group consisting of C₁-C₂₀ alkyl, C₆-C₂₀ aryl, C₇-C₁₂ aralkyl, and C₇-C₁₂ alkylaryl.

In some embodiments, silicon monomer I-A has a general formula as shown in formula I-A:

M-Z₁, or Z₁-M-Z₁ formula I-A

wherein, M comprises the polymerizable functional group;
Z₁ is selected from the following structures, 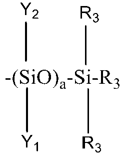
in Z₁, each R₃ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₄-O-R₅-, R₄ is C₁-C₂₀ alkyl, C₆-C₂₀ aryl, C₇-C₁₂ aralkyl, or C₇-C₁₂ alkylaryl, R₅ is C₁-C₂₀ alkylene, 1≤a≤200;
Y₁ and Y₂ are the same or different, and independently selected from the group consisting of C₁-C₂₀ alkyl, C₆-C₂₀ aryl, C₇-C₁₂ aralkyl, C₇-C₁₂ alkylaryl, and the following structures of formula (1), with the condition that when a is 1, Y₁ and/or Y₂ is of the structure of formula (1), and when a is lager than 1 and ≤200, at least one Y₁ is of the structure of formula (1) and/or at least one Y₂ is of the structure of formula (1): 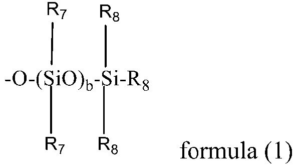
each R₇ is independently selected from the group consisting of C₁-C₂₀ alkyl, C₆-C₂₀ aryl, C₇-C₁₂ aralkyl, and C₇-C₁₂ alkylaryl; each R₈ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₉-O-R₁₀-, wherein R₉ is C₁-C₂₀ alkyl, C₆-C₂₀ aryl, C₇-C₁₂ aralkyl, and C₇-C₁₂ alkylaryl, R₁₀ is C₁-C₂₀ alkylene, 0≤b≤200.

In the present application, in formula I-A, M has the same definition as that in formula I.

In some embodiments, in Z₁, each R₃ is independently C₁-C₁₀ alkyl, C₆-C₁₀ aryl, C₇-C₁₂ aralkyl, C₇-C₁₂ alkylaryl, C₁-C₁₀ alkoxy, or group R₄-O-R₅-, R₄ is C₁-C₁₀ alkyl, C₆-C₁₀ aryl, C₇-C₁₂ aralkyl, or C₇-C₁₂ alkylaryl, R₅ is C₁-C₁₀ alkylene, 1≤a≤100; each R₇ is independently C₁-C₁₀ alkyl, C₆-C₁₀ aryl, C₇-C₁₂ aralkyl, or C₇-C₁₂ alkylaryl; each R₈ is independently C₁-C₁₀ alkyl, C₆-C₁₀ aryl, C₇-C₁₂ aralkyl, C₇-C₁₂ alkylaryl, C₁-C₁₀ alkoxy, or group R₉-O-R₁₀-, wherein R₉ is C₁-C₁₀ alkyl, C₆-C₁₀ aryl, C₇-C₁₂ aralkyl, or C₇-C₁₂ alkylaryl, R₁₀ is C₁-C₁₀ alkylene, and/or 0≤b≤80.

According to some embodiments of the present application, in Z₁, each R₃ is independently C₁-C₆ alkyl, C₆-C₁₀ aryl, C₇-C₁₀ aralkyl, C₇-C₁₀ alkylaryl, C₁-C₆ alkoxy, or group R₄-O-R₅- , R₄ is C₁-C₆ alkyl, C₆-C₁₀ aryl, C₇-C₁₀ aralkyl, or C₇-C₁₀ alkylaryl, R₅ is C₁-C₆ alkylene, 1≤a≤30; each R₇ is independently C₁-C₆ alkyl, C₆-C₁₀ aryl, C₇-C₁₀ aralkyl, or C₇-C₁₀ alkylaryl; each R₈ is independently C₁-C₆ alkyl, C₆-C₁₀ aryl, C₇-C₁₀ aralkyl, C₇-C₁₀ alkylaryl, C₁-C₆ alkoxy, or group R₉-O-R₁₀-, wherein R₉ is C₁-C₆ alkyl, C₆-C₁₀ aryl, C₇-C₁₀ aralkyl, or C₇-C₁₀ alkylaryl, R₁₀ is C₁-C₁₆ alkylene, 0≤b≤30.

In some embodiments, in formula I-A, a is an integer of 1 to 80, an integer of 1 to 30, an integer of 1 to 20, or an integer of 1 to 10.

In some embodiments, in formula I-A, b is 0. In some embodiments, in formula I-A, b is an integer of 1 to 30, an integer of 1 to 20, an integer of 1 to 10, or an integer of 1 to 5.

In some embodiments, Z₁ is one or more selected from the following structures i-3 to i-6: 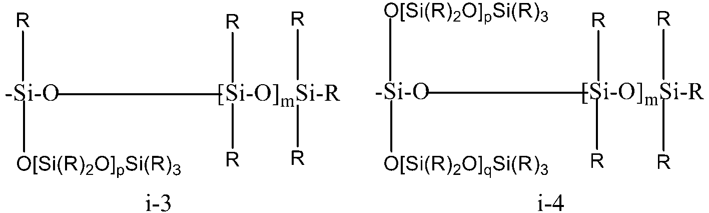 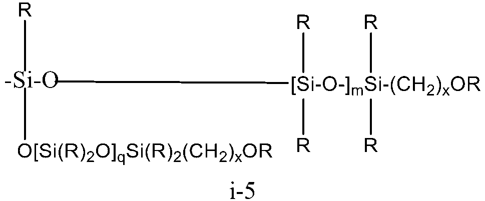 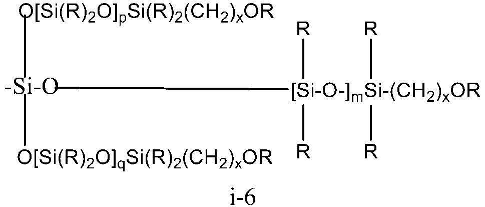
each R is independently selected from the group consisting of C₁-C₁₀ alkyl, C₆-C₁₀ aryl, C₇-C₁₂ aralkyl, and C₇-C₁₂ alkylaryl;
1≤m+1≤60, preferably, 1≤m+1≤30; 0≤p≤60, preferably, 0≤p≤30; 0≤q≤60, preferably, 0≤q≤30; 1≤x≤9, preferably, 1≤x≤7, each x can be the same or different.

In some embodiments, R is C₁-C₃ alkyl, for example methyl.

In some preferable embodiments, Z₁ is one or more selected from the group consisting of the following structures: 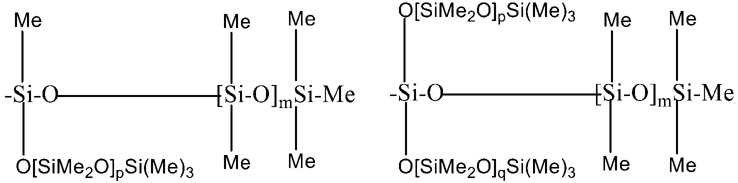 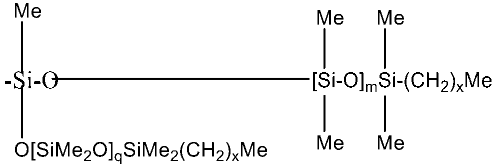 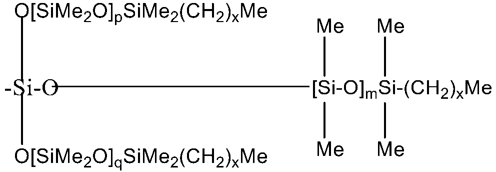 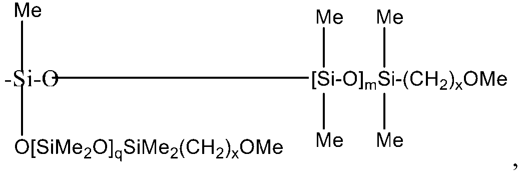 and 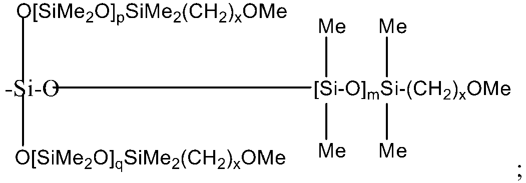 wherein Me represents methyl, 1≤m+1≤60, preferably, 1≤m+1≤30; 0≤p≤60, preferably, 0≤p≤30; 0≤q≤60, preferably, 0≤q≤30; 1≤x≤9, preferably, 1≤x≤7, each x can be are the same or different.

In some embodiments, silicon monomer I-A is selected from the group consisting of
CH₂=C(CH₃)C(O)-O-(CH₂)₃Si(OSi(CH₃)₃)₃;
CH₂=CHC(O)-O-(CH₂)₃Si(OSi(CH₃)₃)₃;
CH₂=C(CH₃)C(O)-O-(CH₂)₃Si(CH₃)(OSi(CH₃)₃)₂;
CH₂=CHC(O)-O-(CH₂)₃Si(CH₃)(OSi(CH₃)₃)₂;
CH₂=C(CH₃)C(O)-NH-(CH₂)₃Si(OSi(CH₃)₃)₃;
CH₂=CHC(O)-NH-(CH₂)₃Si(OSi(CH₃)₃)₃;
CH₂=C(CH₃)C(O)-NH-(CH₂)₃Si(CH₃)(OSi(CH₃)₃)₂;
CH₂=CHC(O)-NH-(CH₂)₃Si(CH₃)(OSi(CH₃)₃)₂;
CH₂=C(CH₃)C(O)-O-(CH₂)₃Si(OSi(CH₂CH₃)₃)₃;
CH₂=CHC(O)-O-(CH₂)₃Si(OSi(CH₂CH₃)₃)₃;
CH₂=C(CH₃)C(O)-O-CH₂-Si(OSi(CH₃)₃)₃;
CH₂=C(CH₃)C(O)-O-(CH₂)₃Si(CH₃)[O-[Si(CH₃)₂O]n-Si(CH₃)₂C₄H₉]₂, 0≤n≤25;
CH₂=CH-ph-Si(OSi(CH₃)₃)₃ (ph represents 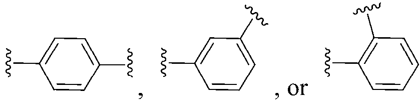 );
CH₂=CH-ph-(CH₂)₂Si(OSi(CH₃)₃)₃ (ph represents 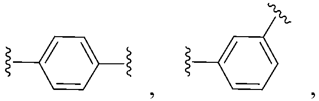 or 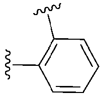 );
CH₂=CH-O-C(O)-NH-(CH₂)₃Si(OSi(CH₃)₃)₃;
CH₂=CH-O-C(O)-O-(CH₂)₃-Si(OSi(CH₃)₃)₃;
CH₂=CH-O-C(O)-O-(CH₂)₂-NH-(CH₂)₃Si(OSi(CH₃)₃)₃;
CH₂=CH-C(O)-N[-(CH₂)₃-Si(OSi(CH₃)₃)₃]₂;
CH₂=CH-C(O)-N[-(CH₂)₃-Si(CH₃)(OSi(CH₃)₃)₂]₂;
CH₂=CH-C(O)-N[-(CH₂)₃-(Si(CH₃)₂O)ₙ-Si(CH₃)₂C₄H₉]₂(C₄H₉represents butyl), 1≤n≤25; and
CH₂=C(CH₃)-C(O)-N[-(CH₂)₃-(Si(CH₃)₂O)ₙ-Si(CH₃)₂C₄H₉]₂(C₄H₉ represents butyl), 1≤n≤25.

In some embodiments, silicon monomer I-B has a general formula as show in formula I-B:

M-Z₂, or Z₂-M-Z₂ formula I-B

wherein, M comprises a polymerizable functional group;
Z₂ is selected from the following structures, 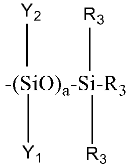
in Z₂, Y₁ and Y₂ are the same or different, and independently selected from the group consisting of C₁-C₂₀ alkyl, C₆-C₂₀ aryl, C₇-C₁₂ aralkyl, and C₇-C₁₂ alkylaryl; each R₃ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₄-O-R₅-, R₄ is C₁-C₂₀ alkyl, C₆-C₂₀ aryl, C₇-C₁₂ aralkyl, or C₇-C₁₂ alkylaryl, R₅ is C₁-C₂₀ alkylene, 1≤a≤200.

In the present application, M in formula I-B has the same definition as that in formula I.

In some embodiments, in Z₂, Y₁ and Y₂ are the same or different, and independently selected from the group consisting of C₁-C₁₀ alkyl, C₆-C₁₀ aryl, C₇-C₁₂ aralkyl, and C₇-C₁₂ alkylaryl; each R₃ is independently selected from the group consisting of C₁-C₁₀ alkyl, C₆-C₁₂ aryl, C₇-C₁₂ aralkyl, C₇-C₁₂ alkylaryl, C₁-C₁₀ alkoxy and group R₄-O-R₅-, R₄ is C₁-C₁₀ alkyl, C₆-C₁₂ aryl, C₇-C₁₂ aralkyl, or C₇-C₁₂ alkylaryl, and R₅ is C₁-C₁₀ alkylene.

According to some embodiments of the present application, in Z₂, 1≤a≤80. According to some embodiments of the present application, in Z₂, 1≤a≤30. According to some embodiments of the present application, in Z₂, 1≤a≤20. According to some embodiments of the present application, in Z₂, 1≤a≤10.

In some embodiments, in Z₂, Y₁ and Y₂ are the same or different, and independently selected from the group consisting of C₁-C₆ alkyl, C₆-C₁₀ aryl, C₇-C₁₀ aralkyl, and C₇-C₁₀ alkylaryl; each R₃ is independently selected from the group consisting of C₁-C₆ alkyl, C₆-C₁₀ aryl, C₇-C₁₀ aralkyl, C₇-C₁₀ alkylaryl, C₁-C₆ alkoxy, and group R₄-O-R₅-, R₄ is C₁-C₆ alkyl, C₆-C₁₀ aryl, C₇-C₁₀ aralkyl, or C₇-C₁₀ alkylaryl, and R₅ is C₁-C₆ alkylene.

In some embodiments, Z₂ is one or more selected from the group consisting of the following structures i-1 to i-2: 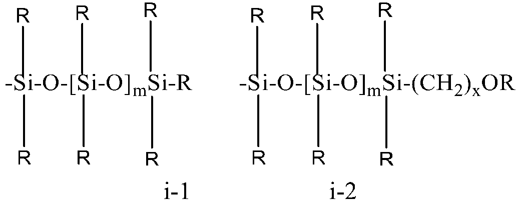
each R is independently selected from the group consisting of C₁-C₁₀ alkyl, C₆-C₁₀ aryl, C₇-C₁₂ aralkyl, and C₇-C₁₂ alkylaryl;
1≤m+1≤60, preferably,1≤m+1≤30; 1≤x≤9, preferably, 1≤x≤7.

Preferably, Z₂ is one or more selected from the following structures: 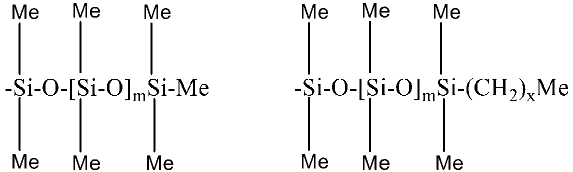 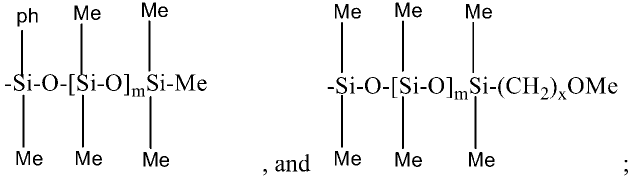 wherein Me represents methyl, ph represents phenyl; 1≤m+1≤60, preferably, 1≤m+1≤30; 1≤x≤9, preferably, 1≤x≤7.

In some embodiments, silicon monomer I-B is selected from the following:
CH₂=C(CH₃)C(O)-O-(CH₂)₃[Si(CH₃)₂O]n-Si(CH₃)₂C₄H₉ (C₄H₉ represents butyl), 1≤n≤25;
CH₂=C(CH₃)C(O)-O-(CH₂)₃[Si(CH₃)₂O]n-Si(CH₃)₂C₈H₁₇, 1≤n≤25;
CH₂=C(CH₃)C(O)-O-(CH₂)_{3[}Si(CH₃)₂O]n-Si(CH₃)₃, 1≤n≤25;
CH₂=CH-ph-(CH₂)₃[Si(CH₃)₂O]n-Si(CH₃)₂C₄H₉ (C₄H₉ represents butyl, ph represents 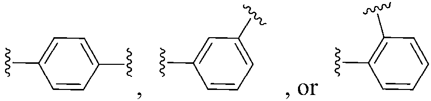 ), 1≤n≤25;
CH₂=CH-O-C(O)-NH-(CH₂)₃-[Si(CH₃)₂O]n-Si(CH₃)₂C₄H₉(C₄H₉ represents butyl), 1≤n≤25;
CH₂=CH-O-C(O)-O-(CH₂)₃-[Si(CH₃)₂O]n-Si(CH₃)₂C₄H₉(C₄H₉ represents butyl), 1≤n≤25; and
CH₂=CH-O-C(O)-O-(CH₂)₂-NH-(CH₂)₃[Si(CH₃)₂O]n-Si(CH₃)₂C₄H₉(C₄H₉ represents butyl), 1≤n≤25.

In some embodiments, a mass content of the repeating unit generated by monomer I is 30% to 90%. In some embodiments, a mass content of the repeating unit generated by monomer I is 40% to 85%. In some embodiments, a mass content of the repeating unit generated by monomer I is 45% to 75%. In some embodiments, a mass content of the repeating unit generated by monomer I is 35%, 40%, 45%, 50%, 55%, 60%, 65%, 70%, 75%, 80%, 85%, 90%, or a range composed of any two values thereof.

In some embodiments, a mass content of the repeating unit generated by monomer II is 5% to 65%. In some embodiments, a mass content of the repeating unit generated by monomer II is 10% to 50%. In some embodiments, a mass content of the repeating unit generated by monomer II is 15% to 45%. In some embodiments, a mass content of the repeating unit generated by monomer II is 5%, 10%, 20%, 25%, 35%, 40%, 45%, 50%, 55%, 60%, 65%, or a range composed of any two values thereof.

In some embodiments, a mass content of the repeating unit generated by monomer III in the copolymer is 0.5% to 30%. In some embodiments, a mass content of the repeating unit generated by monomer III in the copolymer is 3% to 15%. In some embodiments, more preferably a mass content of the repeating unit generated by monomer III in the copolymer is 5% to 10%. In some embodiments, a repeating unit generated by monomer III in the copolymer is 1%, 3%, 5%, 8%, 10%, 15%, 20%, 25%, 30%, or a range composed of any two values thereof.

In some embodiments, by mass percentage, the repeating unit generated by silicon monomer I-A accounts for 1% to 100%, 5% to 100%, 10% to 100%, or 50% to 100%, for example 1%, 5%, 10%, 20%, 25%, 30%, 35%, 40%, 45%, 50%, 55%, 60%, 65%, 70%, 75%, 80%, 85%, 90%, 95%, 98%, or a range composed of any two values thereof, of the total amount of the repeating units generated by both silicon monomer I-A and silicon monomer I-B. The total amount of the repeating units generated by both silicon monomer I-A and silicon monomer I-B is the total amount of the repeating unit generated by monomer I.

In some embodiments, the copolymer of the present application comprises or does not comprise a repeating unit generated by monomer IV, wherein monomer IV is one or more selected from dimethylaminoethyl (meth)acrylate, dimethylamino propyl (meth)acrylate, diethylaminoethyl (meth)acrylate, diethylamino propyl (meth)acrylate, N-tert-butylaminoethyl (meth)acrylate, dimethylaminoethyl (meth)acrylamide, diethylaminoethyl (meth)acrylamide, dipropylaminoethyl (meth)acrylamide, dimethylamino propyl (meth)acrylamide, diethylamino propyl (meth)acrylamide, or dipropylamino propyl (meth)acrylamide.

Preferably, the structural formula of monomer IV is shown in formula IV:

CH₂=C(R₁)-P-B-N(R₃R₄) IV

in formula IV, P is selected from the groups as shown in P-1 and P-2,

-C(O)-O- P-1

-C(O)-N(R₂)- P-2

wherein B is C₁-C₂₀ alkylene; R₁ and R₂ are independently hydrogen atom or C₁-C₂₀ alkyl; R₃ and R₄ are independently hydrogen atom, C₁-C₁₈ alkyl, hydroxyethyl, or benzyl, or R₃ and R₄ are jointed and, together with the nitrogen atom, form a morpholino group, a piperidino group, or a pyrrolidino group.

In some embodiments, the copolymer of the present application does not comprise a repeating unit generated by monomer IV, wherein monomer IV is one or more selected from dimethylaminoethyl (meth)acrylate, dimethylamino propyl (meth)acrylate, diethylaminoethyl (meth)acrylate, diethylamino propyl (meth)acrylate, N-tert-butylaminoethyl (meth)acrylate, dimethylaminoethyl (meth)acrylamide, diethylaminoethyl (meth)acrylamide, dipropylaminoethyl (meth)acrylamide, dimethylamino propyl (meth)acrylamide, diethylamino propyl (meth)acrylamide, or dipropylamino propyl (meth)acrylamide.

In some embodiments, the structural formula of monomer IV is shown in formula IV:

CH₂=C(R₁)-P-B-N(R₃R₄) IV

in formula IV, P is selected from the groups as shown in P-1 and P-2,

-C(O)-O- P-1

-C(O)-N(R₂)- P-2

wherein B is C₁-C₂₀ alkylene; R₁ and R₂ are independently hydrogen atom or C₁-C₂₀ alkyl; R₃ and R₄ are independently hydrogen atom, C₁-C₁₈ alkyl, hydroxyethyl, or benzyl, or R₃ and R₄ are are jointed and, together with the nitrogen atom, form a morpholino group, a piperidino group, or a pyrrolidino group.

In some embodiments, monomer II is of II-3, and the copolymer further comprises the repeating unit generated by the above monomer IV. In some embodiments, monomer II is of II-3, and the copolymer does not comprise the repeating unit generated by the above monomer IV.

In some embodiments, the weight-average molecular weight of the copolymer is 1,000 to 2,000,000, for example, is 5,000 to 1,500,000.

In the second respect, the present application provides a composition comprising the copolymer as described in the first aspect, and a solvent, the solvent comprising water and/or an organic solvent.

In some embodiments, the organic solvent is one or more of acetone, methyl ethyl ketone, 4-methyl-2-pentanone, ethyl acetate, butyl acetate, N-methyl-2-pyrrolidone, N, N-dimethylformamide, ethanol, isopropanol, n-propanol, butylcarbitol, dipropylene glycol methyl ether.

In the third respect, the present application provides a treatment agent comprising the copolymer as described in the first aspect, and a solvent, the solvent comprising water and/or an organic solvent.

In some embodiments, the organic solvent is one or more of acetone, methyl ethyl ketone, 4-methyl-2-pentanone, ethyl acetate, butyl acetate, N-methyl-2-pyrrolidone, N, N-dimethylformamide, ethanol, isopropanol, *n*-propanol, butylcarbitol, dipropylene glycol methyl ether.

In the fourth respect, the present application provides a preparation method for the composition of the second aspect or the treatment agent of the third aspect, comprising steps of:
(1) polymerizing the monomers (includes monomer I, monomer II and monomer III) in an organic solvent, to obtain a copolymer solution.

In some embodiments, by mass, the proportion of monomer I in the total monomer amount is 30% to 90%, preferably 40% to 85%, more preferably 50% to 80%, for example 35%, 40%, 45%, 50%, 55%, 60%, 65%, 70%, 75%, 80%, 85%, 90%, or a range composed of any two values thereof.

In some embodiments, by mass, the proportion of monomer II in the total monomer amount is 5% to 65%, preferably 10% to 50%, more preferably 15% to 45%, for example 5%, 10%, 20%, 25%, 35%, 40%, 45%, 50%, 55%, 60%, 65%, or a range composed of any two values thereof.

In some embodiments, by mass, the proportion of monomer III in the total monomer amount is 0.5% to 30%, preferably 3% to 15%, more preferably 5% to 10%, for example 1%, 3%, 5%, 8%, 10%, 15%, 20%, 25%, 30%, or a range composed of any two values thereof.

In some embodiments, by mass, the proportion of silicon monomer I-A in the total monomer amount of silicon monomer I-A and silicon monomer I-B is 1% to 100%, 5% to 100%, 10% to 100%, 50% to 100%, or 50% to 98%, for example 1%, 5%, 10%, 20%, 25%, 30%, 35%, 40%, 45%, 50%, 55%, 60%, 65%, 70%, 75%, 80%, 85%, 90%, 95%, 98%, or a range composed of any two values thereof.

If needed, the preparation method also can comprises one or more of the following steps(2), and (3):
(2)adding water to the copolymer solution for dispersion, and then removing the organic solvent; or alternatively, removing the solvent firstly and then adding water for dispersion;
(3) adding alkali to the copolymer solution for converting the carboxyl group or sulfonic acid group in the copolymer into carboxylate or sulfonate.

In the fifth aspect, the present application provides use of the copolymer as described in the first aspect, the composition as described in the second aspect, the treatment agent as described in the third aspect, or the composition or treatment agent prepared by the method as described in the fourth aspect in fiber fabric, leather, non-woven fabric, asbesto, fur, concrete, natural stone, paper products, or plastic.

In the sixth aspect, the present application provides a water- and oil-repellent product comprising a product, and the copolymer as described in the first aspect or the composition as described in the second aspect or the composition or treatment agent prepared by the method as described in the third aspect, wherein the product is fiber fabric, leather, non-woven fabric, asbesto, fur, concrete, natural stone, paper product, or plastic.

In some embodiments, the copolymer of the first aspect, the composition of the second aspect, the treatment agent of the third aspect, or the composition or treatment agent prepared by the method of the fourth aspect are attached to the surface and/or interior of the product.

In the seventh aspect, the present application provides a product treatment method comprising contacting the product with the copolymer as described in the first aspect or the composition as described in the second aspect or the treatment agent as described in the third aspect or the composition or treatment agent prepared by the method as described in the fourth aspect. The product is fiber fabric, leather, non-woven fabric, asbesto, fur, concrete, natural stone, paper products, or plastic.

In some embodiments, the contacting is achieved by a surface sizing process, a surface coating process, a wet-end sizing process, or a soaking treatment process.

In the present application, examples of paper products include, but are not limited to, paper sheets and paper-based items such as paper cups, bowls, and plates. In some embodiments, paper products include paper sheets, cartons, or molded pulp products.

### Technical Effects of the Invention

The copolymer and its resulting composition or treatment agent disclosed in the present application can be easily dispersed in water or a solvent, and are suitable for processing various articles including fiber fabric, leather, non-woven fabric, asbesto, fur, concrete, natural stone, paper products, and plastic, in acidic, alkaline, and neutral environments. Treatment methods such as coating, soaking, or internal addition can be applied. After processing, the surface of treated articles can be imparted oil-repellent and water-repellent properties.

### DETAILED EMOBDIMENTS

In order to make the purpose, technical solutions and advantages of the present application clearer, the present application is further described in detail below in conjunction with the embodiments. These embodiments are only used to explain the present application and are not intended to constitute any limitation to the present application. The actual protection scope of the present application is set forth in the claims.

In present application, unless otherwise specified, the terms used have the general meanings known to those skilled in the art.

In the present application, the term "alkyl" refers to a straight chain alkyl or a branched alkyl, non-limiting examples of which include: methyl, ethyl, *n*-propyl, isopropyl, *n*-butyl, sec-butyl, isobutyl, tert-butyl, *n*-pentyl, 1-ethylpropyl, 2-methylbutyl, 3-methylbutyl, 2,2-dimethylpropyl, *n*-hexyl, 2-methylpentyl, 3-methylpentyl, etc.

In the present application, the term "alkylene" refers to a straight chain alkylene or a branched chain alkylene, non-limiting examples of which include: methylene, ethylene, *n*-propylene, *n*-butylene, *n*-pentylene, -CHCH₃CH₂-, -CHCH₃CH₂CH₂-, CH₂CH₃CHCH₂-, etc.

In this application, unless otherwise specified,"%" refers to mass percentage.

### 1. Polymerization method

The polymerization method of the copolymer is not particularly limited, and conventional free radical polymerization methods such as bulk polymerization, solution polymerization in an organic solvent, and emulsion polymerization in water can all be used.

In the present application, it is preferred that after polymerization (such as solution polymerization or emulsion polymerization), water and alkali are added and then the solvent is removed to obtain an aqueous dispersion; or the solvent may be removed and then water and alkali are added to obtain an aqueous dispersion.

As the initiator of the polymer, peroxide, azo compound or persulfate compound can be used. The polymerization initiator can be an oil-soluble or water-soluble initiator depending on the polymerization system.

Examples of oil-soluble polymerization initiators preferably include 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl-2,2'-azobis(2-methylpropionate), benzoyl peroxide, di-tert-butyl peroxide, lauroyl peroxide, cumene hydroperoxide, tert-butyl peroxypivalate, diisopropyl peroxydicarbonate, and the like.

Examples of water-soluble polymerization initiators preferably include 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-imidazolin-2-yl)propane] hydrochloride, potassium persulfate, barium persulfate, ammonium persulfate, hydrogen peroxide, tert-butyl hydroperoxide, and the like.

The polymerization initiator is preferably a peroxide or an azo compound having a half-life of 10 hours and a decomposition temperature of above 40°C, such as tert-butyl peroxypivalate, 2,2'-azobis(2-methylpropionitrile), and the like.

The typical solution polymerization process of the present application is as follows.

First, a solvent is added, then a corresponding monomer is added to dissolve, nitrogen gas is introduced to replace the oxygen, then an initiator is added, and heated to the reaction temperature of 40°C to 120°C, and the reaction time varies from 4 to 20 hours.

The manufacturing process of the composition or treatment agent of the present application is as follows:
(1) monomer I, monomer II and monomer III are added into an organic solvent according to a certain proportion, and then an initiator is added to carry out polymerization;
(2) if necessary, after the polymerization is completed, water is added for dispersion and the organic solvent is removed, or the organic solvent is removed first and then water is added for dispersion;
(3) if necessary, an alkali is added to convert a carboxyl group or sulfonic acid group in the copolymer into a salt.

### 2. Test Method

### Paper product processing and testing method

Paper products that can be processed include tissue paper, thick paper, cardboards, mold pulp products or the like, varying from paper boxes weighting up to 300 g per unit area (m²) to kraft paper weighting up to 80 g per unit area (m²), from tissue paper weighting up to 30 g per unit area (m²) to mold pulp products weighting up to 200 g per unit area (m²).

The raw materials for paper products can be chemical bleached pulp or unbleached pulp, wood pulp, chemi-mechanical pulp, mechanical pulp, and the like, or the same pulp added with resin components such as polyamide, polyolefin, polyvinyl alcohol, and the like. The procedure for paper processing is as follows.

### (1) Wet end treatment: Paper plastic weight 350g/m²

A reed pulp board is directly subjected to pulping treatment, the beating degree is 600 mL of Canadian Standard Freeness, the pulp concentration is 0.3%, and its pH value is tested to be around 8.7. A sizing agent alkyl ketene dimer (AKD) is added in sequence, with the addition amount of 2% of the dry paper weight, and then a fixing agent Alcofix^{®}159 is added with the addition amount of 0.1% to 0.2%, and finally a synthesized composition is added with the addition amount of 1% to 15% of the dry paper weight.

The pulp is poured into a 10-inch molded disc screen according to the specified weight, Then, the water is removed by vacuum filtration. The molded disc is baked at 150°C for 120 seconds to evaluate the oil- and water-repellency of the tableware.

### (2) Surface sizing treatment example:

### Test paper production: Paper product weight 50 g/m²

Chemical pulp LBKP (broadleaf bleached kraft pulp) and NBKP (coniferous bleached kraft pulp) were used in a ratio of 5:5, and the pulp was debonded, and the beating degree was 200 mL of Canadian Standard Freeness. In the papermaking process, cationic starch MC-2 type starch produced by Guangxi Mingyangyang Biochemical Company was added, and the addition amount was 1% by weight of the pulp, and a tissue paper with a weight of 50 g/m² was made by a fourdrinier paper machine.

The starch used for sizing is Y+L corn oxidized starch produced by Jiangxi Hongda Chemical Company, with a concentration of 5%. The starch solution is first heated to above 90°C for gelatinization. After gelatinization, the pH value of the sizing solution is tested to be 8.5 to 8.9, and then the synthesized composition or treatment agent is added. The concentration of the composition or treatment agent in the starch solution is 1% to 15% by weight. The temperature of the starch solution is controlled to be not less than 70°C, and the paper product is first subjected to surface sizing treatment, and the liquid absorption exceeds 70%, and then dried to obtain the treated paper product.

### (3) Surface coating example:

### Preparation of test paper products: Paper product weight 230 g/m²

The paper product is made of five layers, of which the bottom and top layers are chemical pulp boards LBKP (bleached kraft pulp from broadleaf trees) plus NBKP (bleached kraft pulp from coniferous trees), with a ratio of 7:3. The middle three layers are made of chemical mechanical pulp or mechanical pulp boards, which are compounded on the paper machine to form a paperboard with a weight of 230 g/m².

The coating starch used is the coating starch AS-28 produced by Guangxi Mingyang Biochemical Company. The starch concentration is 20%. The starch is added with water and heated to above 90°C for gelatinization. After gelatinization, the pH value of the coating solution is tested to be 8.4 to 8.7. Then the synthesized composition or treatment agent is added. The concentration of the composition or treatment agent in the starch solution is 1% to 15% (mass concentration). The starch temperature is controlled to be not less than 50°C, and the paper product coating machine is used to apply it to the top layer of the paperboard. The coating amount is 3 to 8 g/m².
Oil- and water-repellency evaluation
Oil-repellency evaluation
Hot oil resistance test

The treated paper products are made into containers that can hold liquids. Hot oil (salad oil, peanut oil or rapeseed oil) at 85°C is poured into the paper container. The container is observed for 20 minutes to see if there is any penetration, and rating and scoring are performed.
Score 5: no surface discoloration;
Score 4: slight discoloration of the surface;
Score 3: surface discoloration and slight penetration;
Score 2: severe penetration.

### Water-repellency evaluation

### (1) Cobb test

This test is conducted according to the specification of GB/T1540-2002 or ISO 535:1991, and its principle is to determine the weight (g) of water absorbed by 100 cm² paper supporting water of a 10mm height during a time period of 1 minute. The result is reported as water weight per 1 square meter (g/m²).

The instrument used in Cobb absorption test is generally a flipped cylinder tester, wherein the metal cylinder is a cylindrical body, with an internal cross-sectional area of (100 ± 0.2) cm² and a corresponding internal diameter of (112.8 ± 0.2) mm. If a cylinder with small cross-sectional area is used, the cross-sectional area should generally not be less than 50 cm², and the volume of aqueous liquid should be reduced accordingly to ensure a liquid level height of 10 mm. The height of the cylinder is 50 mm, and the part for contacting the specimen should be smooth and sufficiently rounded, so that any damage to the specimen by the edge of the cylinder can be avoided. In order to prevent aqueous liquid leakage, an elastic but non-absorbent rubber pad or washer should be applied to the cover and the flat base of the flipped cylinder. The metal pressure roller should have a width of (200 ± 0.5) mm, a mass of (10 ± 0.5) kg, and a smooth surface.

10 pieces specimens (each 5 pieces for testing front and back surfaces) are cut from the processes paper, as squares with side length (125 ± 5) mm or circles with a diameter ¢ of (125 ± 5) mm. For instruments with small testing areas, the size of the specimen should be slightly larger than the outer diameter of the cylinder to avoid any leakage due to too small specimen. On the other hand, too large should be avoided so as to prevent interference with operation.

Before placing the specimen, it should be ensured that both the internal surface of the cylinder and the rubber pad to be in contact with the specimen are dry, and any contact of hands with the testing area should be avoided. 100 mL of water is added into the cylinder via measuring cylinder. A weighted specimen is placed on the circular surface of the cylinder with testing surface facing down and covered with press cover and clamped tightly to secure it with the cylinder.

The cylinder is turned upside down 180° and meanwhile turning on a stopwatch to count 60 seconds for water absorption. 10 to 15 seconds before the end of the water absorption time, the cylinder is turned back, the clamping device for press cover is released, and the specimen is recovered. Note that test water should be replaced after every 5 tests with a new one, to avoid any potential adverse effects on results. At the moment when the specified water absorption time elapses, the specimen that has been removed from the cylinder is placed on a blotting paper spread in advance, with the water absorption surface facing down, covered on its top by another sheet of blotting paper, and immediately rolled by a metal roller forth and back once over 4 seconds without any further applied pressure, to absorb any remaining water on the surface of the specimen. The specimen is taken out quickly, and folded with the water absorption surface inside, and then folded once more and weighted to the accuracy of 0.001g. For specimens of thick cardboard that may not be easily folded, the second weighing should be carried out as soon as possible.
Cobb value is calculated by the formula: C= (g2-g1) /F
wherein: C refers to cobb value;
g2 refers to specimen weight after water absorption;
g1 refers to specimen weight before water absorption;
F refers to 100cm² testing area;

### (2) Hot-water resistant test

This test directly evaluates the hot-water resistant ability of paper. The testing method is relatively simple and generally comprises making the treated paper into a container that can hold liquid, pouring 100°C boiling water into the container, and observing for 30 minutes for any permeation and/or leakage. If there is no leakage, it is considered as passing. This method is suitable for mold pulp products.

### Stone treating and testing methods:

The natural stones that can be treated include marbles, granites, sandstones, slates, etc.

Taking natural marble as an example, to prevent acidic liquids from corroding the marble, the pH of the treatment solution is uniformly adjusted to 8.3. The natural marble samples are then immersed in a diluted treatment solution (diluted to a certain multiple with water), removed, and air-dried naturally for 48 hours at a temperature no lower than 25°C. Subsequently, substances such as salad oil, mustard sauce, coffee, and vinegar are separately dripped onto the surface of the natural marble to observe the wetting state. If no penetration occurs, it indicates better resistance.
Score 5 represents no surface discoloration;
Score 4 represents slight surface discoloration;
Score 3 represents surface discoloration and slight permeation;
Score 2 represents severe permeation.

### 3. Examples and Comparative examples

See Table 1 for chemical abbreviations:

**Table 1 code and chemical formula of each substance**

| **Abbreviation in Examples** | | **Chemical formula** |
|---|---|---|
| | **Si-B3** | CH₂=C(CH₃)C(O)-O-(CH₂)₃Si(OSi(CH₃)₃)₃ |
| | **Si-NB3** | CH₂=C(CH₃)C(O)-NH-(CH₂)₃Si(OSi(CH₃)₃)₃ |
| | **Si-ph-B3** | 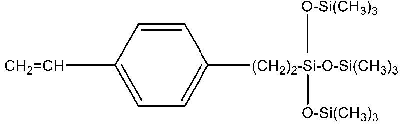 |
| | **Si-OCN-B3** | CH₂=CH-O-C(O) -NH-(CH₂)₃Si(OSi(CH₃)₃)₃ |
| | **Si-OCO-B3** | CH₂=CH-O-C(O)-O-(CH₂)₃-Si(OSi(CH₃)₃)₃ |
| | **Si-B2** | CH₂=C(CH₃)C(O)-O-(CH₂)₃Si(CH₃)(OSi(CH₃)₃)₂ |
| | **Si-N2-B2** | CH₂=CH-C(O)-N[-(CH₂)₃-Si(CH₃)(OSi(CH₃)₃)₂]₂ |
| | **Si-5** | CH₂=C(CH₃)C(O)-O-(CH₂)₃[Si(CH₃)₂O]n-Si(CH₃)₂ C₄H₉ |
| | | -C₄H₉ represents n-butyl, average molecular weight 500 |
| | **PEG-A** | CH₂=CH-C(O)-O(CH₂CH₂O)ₙH, **n is 10** |
| | **HEMA** | 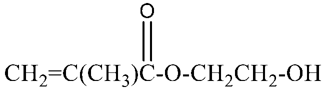 |
| | **MAA** | CH₂=C(CH₃)-COOH |
| | **DN** | CH₂=C(CH₃)C(O)-NH-(CH₂)₃-N(CH₃)₂ |
| | **NVP** | 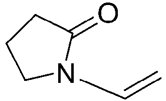 |
| | **N-vinyl-2-piperidone** | 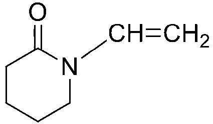 |
| | **N-acryloylpyrrolidine** | 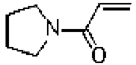 |
| | **AM** | CH₂=CHC(O)-NH₂ |

### Example 1

75 g of Si-B3, 50 g of PEG-A, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by gas chromatography-mass spectrometry, and the residual mass concentration of each monomer was less than 0.1%, indicating that the monomer composition of the obtained polymer was almost the same as the monomer composition added.

538 g of water and 2.5 g of sodium hydroxide were added, and the mixture solution was stirred at 60°C for more than 1 hour. MEK in the solution was distilled off under reduced pressure to obtain an aqueous dispersion having a solid content of 20 %.

### Examples 2 to 8

The steps were the same as those of Example 1, except that the following monomers I with different structures namely Si-NB3 (Example 2), Si-ph-B3 (Example 3), Si-OCN-B3 (Example 4), Si-OCO-B3 (Example 5), Si-B2 (Example 6), Si-N2-B2 (Example 7), Si-5 (average molecular weight of 500) (Example 8) were used to replace Si-B3, respectively. The obtained polymer solutions were tested by gas chromatography-mass spectrometry, and the residual mass concentration of each monomer was less than 0.1%, indicating that the monomer composition of the obtained polymer was almost the same as the monomer composition added.

### Example 9

75 g of Si-B3, 50 g of HEMA, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition added.

538 g of water and 2.5 g of sodium hydroxide were added, and the mixture solution was stirred at 60°C for more than 1 hour. MEK in the solution was distilled off under reduced pressure to obtain an aqueous dispersion having a solid content of 20 %.

### Performance testing

The compositions synthesized in the examples and comparative examples were used as treatment agents to test several articles:
1) Paper tableware test: a reed pulp was used to prepare a pulp solution with a concentration of 1wt%, and the pH value was 8.6. 2wt% of AKD type sizing agent by dry paper weight, 0.12% of retention aid Alcofix^{®} 159 and 10wt%, 6wt%, 3wt% of treatment agent by dry paper weight respectively, were added to make 10-inch plates with a weight of 20 grams. The plates were tested with 85°C salad oil for 20 minutes, and graded and scored according to the penetration; tested with 100°C boiling water for 30 minutes, and recorded whether they passes or leaks.
2) Test of paper products: 50 g/m² tissue paper was selected and treated by surface sizing. The starch used for sizing was Y+L corn oxidized starch produced by Jiangxi Hongda Chemical Company, and the pH value of the sizing solution was measured to be 8.7. The concentrations of the treatment agent were 5wt%, 4wt%, and 3wt%, respectively, and the heat oil resistance and Cobb water absorption value were tested.
3) Test of paper products: 230 g/m² cardboard was selected and treated by coating. The coating starch used was the AS-28 produced by Guangxi Mingyang Biochemical Company, and the pH value of the coating liquid was tested to be 8.5. The concentrations of the treatment agent were 5wt%, 4wt%, and 3wt%, respectively, and the heat oil resistance and Cobb water absorption value were tested.
4) Test of natural marble: A treatment agent was diluted with water to prepare solutions of 3wt%, 2wt% and 1wt% respectively. To prevent acidic liquid from corroding the marble, the pH value of the treatment agents were adjusted to 8.3. Marble samples were then immersed soaked in the treatment solutions, taken out and dried naturally for 48 hours at a temperature not lower than 25°C. Then salad oil and coffee were respectively dripped onto the surface of the natural marble, observing the wetting state, and grading scores were assigned.

**Table 2 Example Test Performance table**

| | Example | | | | | | | | |
|---|---|---|---|---|---|---|---|---|---|
| | 1 | 2 | 3 | 4 | 5 | 6 | 7 | 8 | 9 |
| Plate hot oil test | | | | | | | | | |
| 10wt % | 5 | 5 | 5 | 5 | 5 | 5 | 5 | 5 | 5 |
| 6wt% | 5 | 5 | 5 | 5 | 5 | 4 | 4 | 3 | 5 |
| 3wt% | 5 | 5 | 5 | 5 | 5 | 3 | 3 | 2 | 5 |

| Plate boiling water test | | | | | | | | | |
|---|---|---|---|---|---|---|---|---|---|
| 10wt % | Passed | Passed | Passed | Passed | Passed | Passed | Passed | Passed | Passed |
| 6wt% | Passed | Passed | Passed | Passed | Passed | Passed | Passed | Passed | Passed |
| 3wt% | Passed | Passed | Passed | Passed | Passed | Passed | Passed | Not passed | Passed |

| Heat oil-resistant of 50g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 5 | 5 | 4 | 5 |
| 3%wt | 5 | 5 | 5 | 5 | 5 | 4 | 4 | 3 | 5 |

| Cobb value of 50g paper | | | | | | | | | |
|---|---|---|---|---|---|---|---|---|---|
| 5%wt | 25 | 26 | 27 | 25 | 29 | 27 | 23 | 23 | 22 |
| 4%wt | 27 | 29 | 28 | 26 | 30 | 28 | 23 | 24 | 24 |
| 3%wt | 31 | 34 | 32 | 29 | 34 | 31 | 28 | 28 | 28 |

| Heat oil-resistant of 230g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 4 | 4 | 3 | 5 |
| 3%wt | 5 | 5 | 5 | 5 | 5 | 3 | 3 | 2 | 5 |

| Cobb value of 230g paper | | | | | | | | | |
|---|---|---|---|---|---|---|---|---|---|
| 5%wt | 23 | 24 | 25 | 24 | 27 | 26 | 21 | 22 | 23 |
| 4%wt | 25 | 27 | 27 | 24 | 28 | 27 | 22 | 23 | 23 |
| 3%wt | 28 | 29 | 30 | 28 | 31 | 29 | 26 | 27 | 27 |

| Salad oil test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 5 | 4 | 3 | 3 | 5 |
| 1wt% | 5 | 5 | 4 | 4 | 5 | 3 | 3 | 3 | 5 |

| Coffee oil test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 4 | 4 | 4 | 5 | 5 |
| 1wt% | 4 | 4 | 3 | 4 | 3 | 3 | 3 | 5 | 5 |

It can be seen from Table 2 that under alkaline conditions, after surface sizing, coating or wet-end addition (in-slurry sizing), the compositions obtained in Examples 1 to 9 were used to treat paper products or marble, and all showed good oil- and water-repellency.

### Comparative Example 1

75 g of Si-B3, 40 g of DN, 20 g of PEG-A and 135 g of methyl ethyl ketone (hereinafter referred to as MEK) were added to a 1000 mL four-necked bottle equipped with a reflux condenser, a nitrogen inlet tube, a thermometer and a stirrer, nitrogen was passed for 30 minutes, the temperature was slowly raised to 60°C, 1.4 g of peroxide initiator tert-butyl peroxypivalate was added into the resulting solution, the reaction temperature was controlled at 60°C and the reaction was carried out for 20 hours to obtain a polymer solution of about 270 g with a solid content of about 50%. The obtained polymer solution was tested by a gas chromatography-mass spectrometer, and the residual mass concentration of each monomer was less than 0.1 %, indicating that the monomer composition of the obtained polymer was almost the same as the monomer composition added.

525 g of water and 15 g of glacial acetic acid were added, and the mixture was stirred at 60°C for more than 1 hour. MEK in the solution was distilled off under reduced pressure to obtain an aqueous dispersion with a solid content of 20 %.

### Comparative Examples 2 to 8

The steps were same as those of Comparative Example 1, except that the following monomers I with different structures namely Si-NB3 (Comparative Example 2), Si-ph-B3 (Comparative Example 3), Si-OCN-B3 (Comparative Example 4), Si-OCO-B3 (Comparative Example 5), Si-B2 (Comparative Example 6), Si-N2-B2 (Comparative Example 7), Si-5 (average molecular weight of 500) (Comparative Example 8), were used to replace Si-B3. The obtained polymer solutions were tested by gas chromatography-mass spectrometry, and the residual mass concentration of each monomer was less than 0.1%, indicating that the monomer composition of the obtained polymer is almost the same as the monomer composition added.

### Comparative Example 9

75 g of Si-B3, 40 g of DN, 20 g of HEMA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition of the added monomer.

525 g of water and 15 g of glacial acetic acid were added, and the mixture was stirred at 60°C for more than 1 hour. MEK in the solution was distilled off under reduced pressure to obtain an aqueous dispersion with a solid content of 20 %.

The performance of Comparative Examples 1 to 9 was tested according to the test method of the Examples. The results are shown in Table 3.

**Table 3 Comparative test performance table**

| | Comparative example | | | | | | | | |
|---|---|---|---|---|---|---|---|---|---|
| | 1 | 2 | 3 | 4 | 5 | 6 | 7 | 8 | 9 |
| Plate hot oil test | | | | | | | | | |
| 10wt % | 4 | 4 | 4 | 4 | 4 | 4 | 4 | 3 | 4 |
| 6wt% | 3 | 3 | 3 | 3 | 3 | 2 | 2 | 2 | 3 |
| 3wt% | 2 | 2 | 2 | 2 | 2 | 2 | 2 | 2 | 2 |

| Plate boiling water test | | | | | | | | | |
|---|---|---|---|---|---|---|---|---|---|
| 10wt % | Passed | Passed | Passed | Passed | Passed | Passed | Passed | Passed | Passed |
| 6wt% | Passed | Passed | Passed | Passed | Passed | Passed | Passed | Passed | Passed |
| 3wt% | Not passed | Not passed | Not passed | Not passed | Not passed | Not passed | Not passed | Not passed | Not passed |

| Heat oil-resistant of 50g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 50g paper | | | | | | | | | |
|---|---|---|---|---|---|---|---|---|---|
| 5%wt | 36 | 37 | 39 | 38 | 37 | 40 | 37 | 38 | 35 |
| 4%wt | 40 | 40 | 41 | 41 | 41 | 43 | 41 | 42 | 39 |
| 3%wt | 44 | 45 | 45 | 44 | 45 | 48 | 44 | 46 | 42 |

| Heat oil-resistant of 230g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 230g paper | | | | | | | | | |
|---|---|---|---|---|---|---|---|---|---|
| 5%wt | 34 | 35 | 37 | 35 | 35 | 38 | 35 | 36 | 33 |
| 4%wt | 38 | 39 | 39 | 39 | 38 | 41 | 39 | 40 | 37 |
| 3%wt | 42 | 44 | 43 | 41 | 41 | 45 | 41 | 43 | 40 |

| Salad oil test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

| Coffee test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

**It** can be seen from Table 3 that under alkaline conditions, the compositions obtained in Comparative Examples 1 to 9 cannot impart good oil- and water-repellency to paper products and marble by surface sizing, coating or wet-end addition (in-slurry sizing).

Combining Table 2 and Table 3, it can be seen that the copolymer of the present application and the composition obtained therefrom can impart better oil- and water-repellency to articles such as paper in an alkaline environment.

### Example 10

75 g of Si-B3, 50 g of NVP, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1 %, indicating that the monomer composition of the obtained polymer was almost the same as the monomer composition added.

538 g of water and 2.5 g of sodium hydroxide were added, and the mixture was stirred at 60°C for more than 1 hour. MEK in the solution was distilled off under reduced pressure to obtain an aqueous dispersion having a solid content of 20 %.

### Examples 11 to 17

The steps were the same as those of Example 10, except that the following monomers I with different structures namely Si-NB3 (Example 11), Si-ph-B3 (Example 12), Si-OCN-B3 (Example 13), Si-OCO-B3 (Example 14), Si-B2 (Example 15), Si-N2-B2 (Example 16), Si-5 (average molecular weight of 500) (Example 17) were used to replace Si-B3. The obtained polymer solutions were tested by gas chromatography-mass spectrometry, and the residual mass concentration of each monomer was less than 0.1%, indicating that the monomer composition of the obtained polymer is almost the same as the added monomer composition.

### Example 18

75 g of Si-B3, 50 g of N-vinyl-2-piperidone, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50 %. The obtained polymer solution was tested by a gas chromatography-mass spectrometer, and the residual mass concentration of each monomer was less than 0.1 %, indicating that the monomer composition of the obtained polymer was almost the same as the monomer composition of the added monomer.

538 g of water and 2.5 g of sodium hydroxide were added, and the mixture was stirred at 60°C for more than 1 hour. MEK in the solution was distilled off under reduced pressure to obtain an aqueous dispersion having a solid content of 20 %.

### Performance Testing

The compositions synthesized in the examples were used as treatment agents to test several articles:
1) Paper tableware test: a reed pulp was used to prepare a pulp solution with a concentration of 1wt%, and the pH value was 8.6. 2wt% of AKD type sizing agent by dry paper weight, 0.12% of retention aid Alcofix^{®} 159 and 10wt%, 6wt%, 3wt% of treatment agent by dry paper weight respectively, were added to make 10-inch plates with a weight of 20 grams. The plates were tested with 85°C salad oil for 20 minutes, and graded and scored according to the penetration; tested with 100°C boiling water for 30 minutes, and recorded whether they passes or leaks.
2) Test of paper products: 50 g/m² tissue paper was selected and treated by surface sizing. The starch used for sizing was Y+L corn oxidized starch produced by Jiangxi Hongda Chemical Company, and the pH value of the sizing solution was measured to be 8.7. The concentrations of the treatment agent were 5wt%, 4wt%, and 3wt%, respectively, and the heat oil resistance and Cobb water absorption value were tested.
3) Test of paper products: 230 g/m² cardboard was selected and treated by coating. The coating starch used was the AS-28 produced by Guangxi Mingyang Biochemical Company, and the pH value of the coating liquid was tested to be 8.5. The concentrations of the treatment agent were 5wt%, 4wt%, and 3wt%, respectively, and the heat oil resistance and Cobb water absorption value were tested.
4) Test of natural marble: A treatment agent was diluted with water to prepare solutions of 3wt%, 2wt% and 1wt% respectively. To prevent acidic liquid from corroding the marble, the pH value of the treatment agents were adjusted to 8.3. Marble samples were then immersed soaked in the treatment solutions, taken out and dried naturally for 48 hours at a temperature not lower than 25°C. Then salad oil and coffee were respectively dripped onto the surface of the natural marble, observing the wetting state, and grading scores were assigned.

**Table 4 Test performance table of examples.**

| | Example | | | | | | | | |
|---|---|---|---|---|---|---|---|---|---|
| | 10 | 11 | 12 | 13 | 14 | 15 | 16 | 17 | 18 |
| Plate hot oil test | | | | | | | | | |
| 10wt % | 5 | 5 | 5 | 5 | 5 | 5 | 5 | 5 | 5 |
| 6wt% | 5 | 5 | 5 | 5 | 5 | 4 | 4 | 3 | 5 |
| 3wt% | 5 | 5 | 5 | 5 | 5 | 3 | 3 | 2 | 5 |

| Plate boiling water test | | | | | | | | | |
|---|---|---|---|---|---|---|---|---|---|
| 10wt % | Passed | Passed | Passed | Passed | Passed | Passed | Passed | Passed | Passed |
| 6wt% | Passed | Passed | Passed | Passed | Passed | Passed | Passed | Passed | Passed |
| 3wt% | Passed | Passed | Passed | Passed | Passed | Passed | Passed | Not passed | Passed |

| Heat oil-resistant of 50g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 5 | 5 | 4 | 5 |
| 3%wt | 5 | 5 | 5 | 5 | 5 | 4 | 4 | 3 | 5 |

| Cobb value of 50g paper | | | | | | | | | |
|---|---|---|---|---|---|---|---|---|---|
| 5%wt | 26 | 26 | 28 | 26 | 29 | 27 | 24 | 24 | 23 |
| 4%wt | 29 | 30 | 30 | 28 | 31 | 29 | 26 | 27 | 25 |
| 3%wt | 33 | 36 | 34 | 31 | 36 | 34 | 30 | 31 | 29 |

| Heat oil-resistant of 230g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 4 | 4 | 3 | 5 |
| 3%wt | 5 | 5 | 5 | 5 | 5 | 3 | 3 | 2 | 5 |

| Cobb value of 230g paper | | | | | | | | | |
|---|---|---|---|---|---|---|---|---|---|
| 5%wt | 24 | 25 | 26 | 24 | 27 | 27 | 22 | 23 | 24 |
| 4%wt | 27 | 28 | 28 | 26 | 29 | 29 | 24 | 25 | 25 |
| 3%wt | 30 | 32 | 31 | 29 | 33 | 31 | 28 | 29 | 28 |

| Salad oil test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 5 | 4 | 3 | 3 | 5 |
| 1wt% | 5 | 5 | 4 | 4 | 5 | 3 | 3 | 3 | 5 |

| Coffee test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 4 | 4 | 4 | 5 | 5 |
| 1wt% | 4 | 4 | 3 | 4 | 3 | 3 | 3 | 5 | 5 |

It can be seen from Table 4 that under alkaline conditions, after surface sizing, coating or wet-end addition (in-slurry sizing), the compositions obtained in Examples 10 to 18 were used to treat paper products or marble, and all showed good oil- and water-repellency.

### Comparative Example 10

75 g of Si-B3, 40 g of DN, 20 g of NVP and 135 g of methyl ethyl ketone (hereinafter referred to as MEK) were added to a 1000 mL four-necked bottle equipped with a reflux condenser, a nitrogen inlet tube, a thermometer and a stirrer, nitrogen was passed through for 30 minutes, the temperature was slowly raised to 60°C, 1.4 g of peroxide initiator tert-butyl peroxypivalate was added into the resulting solution, the reaction temperature was controlled at 60°C and the reaction was carried out for 20 hours to obtain a polymer solution of about 270 g with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition added.

525 g of water and 15 g of glacial acetic acid were added, and the mixture was stirred at 60°C for more than 1 hour. MEK in the solution was distilled off under reduced pressure to obtain an aqueous dispersion with a solid content of 20 %.

### Comparative Examples 11 to 17

The steps were same as those of Comparative Example 10, except that the following monomers I with different structures namely Si-NB3 (Comparative Example 11), Si-ph-B3 (Comparative Example 12), Si-OCN-B3 (Comparative Example 13), Si-OCO-B3 (Comparative Example 14), Si-B2 (Comparative Example 15), Si-N2-B2 (Comparative Example 16), Si-5 (average molecular weight of 500) (Comparative Example 17) were used to replace Si-B3. The obtained polymer solutions were tested by gas chromatography-mass spectrometry, and the residual mass concentration of each monomer was less than 0.1%, indicating that the monomer composition of the obtained polymer is almost the same as the added monomer composition.

### Comparative Example 18

75 g of Si-B3, 40 g of DN, 20 g of N-vinyl-2-piperidone and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition of the added monomer.

525 g of water and 15 g of glacial acetic acid were added, and the mixture was stirred at 60°C for more than 1 hour. MEK in the solution was distilled off under reduced pressure to obtain an aqueous dispersion with a solid content of 20 %.

The performance of Comparative Examples 10 to 18 was tested according to the test method of the embodiment. The results are shown in Table 5.

**Table 5 Comparative test performance table.**

| | Comparative example | | | | | | | | |
|---|---|---|---|---|---|---|---|---|---|
| | 10 | 11 | 12 | 13 | 14 | 15 | 16 | 17 | 18 |
| Plate hot oil test | | | | | | | | | |
| 10wt% | 4 | 4 | 4 | 4 | 4 | 4 | 4 | 3 | 4 |
| 6wt% | 3 | 3 | 3 | 3 | 3 | 2 | 2 | 2 | 3 |
| 3wt% | 2 | 2 | 2 | 2 | 2 | 2 | 2 | 2 | 2 |

| Plate boiling water test | | | | | | | | | |
|---|---|---|---|---|---|---|---|---|---|
| 10wt% | Passed | Passed | Passed | Passed | Passed | Passed | Passed | Passed | Passed |
| 6wt% | Passed | Passed | Passed | Passed | Passed | Passed | Passed | Passed | Passed |
| 3wt% | Not passed | Not passed | Not passed | Not passed | Not passed | Not passed | Not passed | Not passed | Not passed |

| Heat oil-resistant of 50g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 50g paper | | | | | | | | | |
|---|---|---|---|---|---|---|---|---|---|
| 5%wt | 37 | 37 | 40 | 38 | 37 | 41 | 38 | 39 | 36 |
| 4%wt | 42 | 42 | 42 | 43 | 42 | 44 | 43 | 44 | 41 |
| 3%wt | 46 | 47 | 47 | 46 | 47 | 49 | 46 | 47 | 44 |

| Heat oil-resistant of 230g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 230g paper | | | | | | | | | |
|---|---|---|---|---|---|---|---|---|---|
| 5%wt | 35 | 36 | 37 | 36 | 36 | 38 | 36 | 37 | 33 |
| 4%wt | 40 | 40 | 41 | 41 | 40 | 43 | 41 | 42 | 38 |
| 3%wt | 44 | 46 | 45 | 44 | 44 | 47 | 44 | 45 | 42 |

| Salad oil test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

| Coffee test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

It can be seen from Table 5 that under alkaline conditions, the compositions obtained in Comparative Examples 10 to 18 cannot impart good oil- and water-repellency to paper products and marble by surface sizing, coating or wet-end addition (in-slurry sizing).

Combining Table 4 and Table 5, it can be seen that the copolymer of the present application and the composition obtained therefrom can impart better oil- and water-repellency to articles such as paper and marble in an alkaline environment.

### Example 19

75 g of Si-B3, 50 g of AM, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition of the added monomer.

538 g of water and 2.5 g of sodium hydroxide were added, and the mixture was stirred at 60°C for more than 1 hour. MEK in the solution was distilled off under reduced pressure to obtain an aqueous dispersion having a solid content of 20 %.

### Examples 20 to 26

The steps were same as those of Example 19, except that Si-B3 is replaced by the following silicon-containing monomers 1-1 with different structures, namely Si-NB3 (Example 20), Si-ph-B3 (Example 21), Si-OCN-B3 (Example 22), Si-OCO-B3 (Example 23), Si-B2 (Example 24), Si-N2-B2 (Example 25), Si-5 (average molecular weight of 500) (Example 26). The obtained polymer solutions were tested by gas chromatography-mass spectrometry, and the residual mass concentration of each monomer was less than 0.1%, indicating that the monomer composition of the obtained polymers was almost the same as the added monomer composition.

### Example 27

75 g of Si-B3, 50 g of N-acryloylpyrrolidine, 10 g of MAA and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition of the added monomer.

538 g of water and 2.5 g of sodium hydroxide were added, and the mixture was stirred at 60°C for more than 1 hour. MEK in the solution was distilled off under reduced pressure to obtain an aqueous dispersion with a solid content of 20%.

### Performance Testing

The aqueous dispersion synthesized in the examples were used as treatment agents to test several articles:
1) Paper tableware test: a reed pulp was used to prepare a pulp solution with a concentration of 1wt%, and the pH value was 8.6. 2wt% of AKD type sizing agent by dry paper weight, 0.12% of retention aid Alcofix^{®} 159 and 10wt%, 6wt%, 3wt% of treatment agent by dry paper weight respectively, were added to make 10-inch plates with a weight of 20 grams. The plates were tested with 85°C salad oil for 20 minutes, and graded and scored according to the penetration; tested with 100°C boiling water for 30 minutes, and recorded whether they passes or leaks.
2) Test of paper products: 50 g/m² tissue paper was selected and treated by surface sizing. The starch used for sizing was Y+L corn oxidized starch produced by Jiangxi Hongda Chemical Company, and the pH value of the sizing solution was measured to be 8.7. The concentrations of the treatment agent were 5wt%, 4wt%, and 3wt%, respectively, and the heat oil resistance and Cobb water absorption value were tested.
3) Test of paper products: 230 g/m² cardboard was selected and treated by coating. The coating starch used was the AS-28 produced by Guangxi Mingyang Biochemical Company, and the pH value of the coating liquid was tested to be 8.5. The concentrations of the treatment agent were 5wt%, 4wt%, and 3wt%, respectively, and the heat oil resistance and Cobb water absorption value were tested.
4) Test of natural marble: A treatment agent was diluted with water to prepare solutions of 3wt%, 2wt% and 1wt% respectively. To prevent acidic liquid from corroding the marble, the pH value of the treatment agents were adjusted to 8.3. Marble samples were then immersed soaked in the treatment solutions, taken out and dried naturally for 48 hours at a temperature not lower than 25°C. Then salad oil and coffee were respectively dripped onto the surface of the natural marble, observing the wetting state, and grading scores were assigned.

**Table 6 Test performance table of examples.**

| | Example | | | | | | | | |
|---|---|---|---|---|---|---|---|---|---|
| | 19 | 20 | 21 | 22 | 23 | 24 | 25 | 26 | 27 |
| Plate hot oil test | | | | | | | | | |
| 10wt % | 5 | 5 | 5 | 5 | 5 | 5 | 5 | 5 | 5 |
| 6wt% | 5 | 5 | 5 | 5 | 5 | 4 | 4 | 3 | 5 |
| 3wt% | 5 | 5 | 5 | 5 | 5 | 3 | 3 | 2 | 5 |

| Plate boiling water test | | | | | | | | | |
|---|---|---|---|---|---|---|---|---|---|
| 10wt | Passed | Passed | Passed | Passed | Passed | Passed | Passed | Passed | Passed |
| % | | | | | | | | | |
| 6wt% | Passed | Passed | Passed | Passed | Passed | Passed | Passed | Passed | Passed |
| 3wt% | Passed | Passed | Passed | Passed | Passed | Passed | Passed | Not passed | Passed |

| Heat oil-resistant of 50g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 5 | 5 | 4 | 5 |
| 3%wt | 5 | 5 | 5 | 5 | 5 | 4 | 4 | 3 | 5 |

| Cobb value of 50g paper | | | | | | | | | |
|---|---|---|---|---|---|---|---|---|---|
| 5%wt | 27 | 29 | 27 | 25 | 29 | 29 | 26 | 24 | 24 |
| 4%wt | 29 | 31 | 28 | 28 | 31 | 30 | 27 | 25 | 26 |
| 3%wt | 31 | 35 | 34 | 32 | 34 | 34 | 32 | 31 | 31 |

| Heat oil-resistant of 230g paper | | | | | | | | | |
|---|---|---|---|---|---|---|---|---|---|
| 5%wt | 5 | 5 | 5 | 5 | 5 | 5 | 5 | 5 | 5 |
| 4%wt | 5 | 5 | 5 | 5 | 5 | 4 | 4 | 3 | 5 |
| 3%wt | 5 | 5 | 5 | 5 | 5 | 3 | 3 | 2 | 5 |

| Cobb value of 230g paper | | | | | | | | | |
|---|---|---|---|---|---|---|---|---|---|
| 5%wt | 26 | 26 | 26 | 25 | 27 | 26 | 25 | 23 | 23 |
| 4%wt | 27 | 29 | 27 | 27 | 29 | 28 | 26 | 25 | 25 |
| 3%wt | 30 | 32 | 30 | 29 | 30 | 30 | 28 | 27 | 28 |

| Salad oil test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 5 | 4 | 3 | 3 | 5 |
| 1wt% | 5 | 5 | 4 | 4 | 5 | 3 | 3 | 3 | 5 |

| Coffee test for marble | | | | | | | | | |
|---|---|---|---|---|---|---|---|---|---|
| 3wt% | 5 | 5 | 5 | 5 | 5 | 5 | 5 | 5 | 5 |
| 2wt% | 5 | 5 | 5 | 5 | 4 | 4 | 4 | 5 | 5 |
| 1wt% | 4 | 4 | 3 | 4 | 3 | 3 | 3 | 5 | 5 |

It can be seen from Table 6 that under alkaline conditions, the treatment agents obtained in Examples 19 to 27 showed good oil- and water-repellency after being used to treat paper products or marble by surface sizing, coating, immersion or wet addition (in-slurry sizing).

### Comparative example 19

75 g of Si-B3, 40 g of DN, 20 g of AM and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by gas chromatography-mass spectrometry, and the residual mass concentration of each monomer was less than 0.1%, indicating that the monomer composition of the obtained polymer was almost the same as the monomer composition of the added monomer.

525 g of water and 15 g of glacial acetic acid were added, and the mixture was stirred at 60°C for more than 1 hour. MEK in the solution was distilled off under reduced pressure to obtain an aqueous dispersion with a solid content of 20%.

### Comparative Examples 20 to 26

The steps were same as those of Comparative Example 19, except that the following monomers I with different structures namely Si-NB3 (Comparative Example 20), Si-ph-B3 (Comparative Example 21), Si-OCN-B3 (Comparative Example 22), Si-OCO-B3 (Comparative Example 23), Si-B2 (Comparative Example 24), Si-N2-B2 (Comparative Example 25), Si-5 (average molecular weight of 500) (Comparative Example 26) are used to replace Si-B3. The obtained polymer solutions were tested by gas chromatography-mass spectrometry, and the residual mass concentration of each monomer was less than 0.1%, indicating that the monomer composition of the obtained polymer is almost the same as the added monomer composition.

### Comparative Example 27

75 g of Si-B3, 40 g of DN, 20 g of N-acryloylpyrrolidine and 135 g of methyl ethyl ketone (hereinafter referred to as MEK) were added to a 1000 mL four-necked bottle equipped with a reflux condenser, a nitrogen inlet tube, a thermometer and a stirrer, and nitrogen was passed through for 30 minutes, and the temperature was slowly raised to 60°C, 1.4 g of peroxide initiator tert-butyl peroxypivalate was added into the resulting solution, and the reaction temperature was controlled at 60°C for 20 hours to obtain a polymer solution of about 270 g, with a solid content of about 50%. The obtained polymer solution was tested by a gas chromatography-mass spectrometer, and the residual mass concentration of each monomer was less than 0.1%, indicating that the monomer composition of the obtained polymer was almost the same as the monomer composition of the added monomer.

525 g of water and 15 g of glacial acetic acid were added, and the mixture was stirred at 60°C for more than 1 hour. MEK in the solution was distilled off under reduced pressure to obtain an aqueous dispersion with a solid content of 20%.

The performance of Comparative Examples 19 to 27 was tested according to the test method of the embodiment. The results are shown in Table 7.

**Table 7 Comparative test performance table.**

| | Comparative Example | | | | | | | | |
|---|---|---|---|---|---|---|---|---|---|
| | 19 | 20 | 21 | 22 | 23 | 24 | 25 | 26 | 27 |
| Plate hot oil test | | | | | | | | | |
| 10wt% | 4 | 4 | 4 | 4 | 4 | 4 | 4 | 3 | 4 |
| 6wt% | 3 | 3 | 3 | 3 | 3 | 2 | 2 | 2 | 3 |
| 3wt% | 2 | 2 | 2 | 2 | 2 | 2 | 2 | 2 | 2 |

| Plate boiling water test | | | | | | | | | |
|---|---|---|---|---|---|---|---|---|---|
| 10wt% | Passed | Passed | Passed | Passed | Passed | Passed | Passed | Passed | Passed |
| 6wt% | Passed | Passed | Passed | Passed | Passed | Passed | Passed | Passed | Passed |
| 3wt% | Not passed | Not passed | Not passed | Not passed | Not passed | Not passed | Not passed | Not passed | Not passed |

| Heat oil-resistant of 50g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 50g paper | | | | | | | | | |
|---|---|---|---|---|---|---|---|---|---|
| 5%wt | 38 | 37 | 41 | 39 | 37 | 42 | 39 | 39 | 37 |
| 4%wt | 43 | 43 | 43 | 44 | 43 | 45 | 44 | 45 | 42 |
| 3%wt | 47 | 49 | 49 | 48 | 48 | *50* | 47 | 49 | 45 |

| Heat oil-resistant of 230g paper | | | | | | | | | |
|---|---|---|---|---|---|---|---|---|---|
| 5%wt | 3 | 3 | 3 | 3 | 3 | 3 | 3 | 2 | 3 |
| 4%wt | 2 | 2 | 2 | 2 | 2 | 2 | 2 | 2 | 2 |
| 3%wt | 2 | 2 | 2 | 2 | 2 | 2 | 2 | 2 | 2 |

| Cobb value of 230g paper | | | | | | | | | |
|---|---|---|---|---|---|---|---|---|---|
| 5%wt | 36 | 37 | 37 | 37 | 36 | 39 | 36 | 38 | 34 |
| 4%wt | 41 | 41 | 42 | 42 | 41 | 44 | 42 | 43 | 39 |
| 3%wt | 46 | 47 | 47 | 45 | 46 | 48 | 45 | 47 | 43 |

| Salad oil test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

| Coffee test for marble | | | | | | | | | |
|---|---|---|---|---|---|---|---|---|---|
| 3wt% | 4 | 4 | 4 | 4 | 4 | 4 | 4 | 3 | 4 |
| 2wt% | 3 | 3 | 3 | 3 | 3 | 2 | 2 | 2 | 3 |
| 1wt% | 2 | 2 | 2 | 2 | 2 | 2 | 2 | 2 | 2 |

As shown in Table 7, when applying surface sizing, coating, soaking, or wet-end sizing (slurry-based sizing) under alkaline conditions, the treatment agents prepared in Comparative Examples 19 to 27 failed to provide adequate oil- and water-resistance for paper products and marble.

By combining Tables 6 and 7, it is evident that the copolymer of the present application and its resultant composition impart superior oil- and water-resistance to articles, especially paper products, in alkaline environments.

Although some exemplary embodiments of the present application have been described and illustrated, the present application is not limited to the disclosed implementations. Rather, those skilled in the art will recognize that the described embodiments may be modified and altered without departing from the spirit and scope of the present application as defined in the appended claims.

## Claims

1. A copolymer comprising a repeating unit generated by monomer I, a repeating unit generated by monomer II, and a repeating unit generated by monomer III, wherein
a) a general formula of monomer I is as shown in formula I:
M-Z, or Z-M-Z formula I
wherein, M comprises a polymerizable functional group;
Z is selected from the group consisting of the following structures, 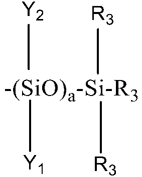
in Z, R₃ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₄-O-R₅- , R₄ is C₁-C₂₀ alkyl, C₆-C₂₀ aryl, C₇-C₁₂ aralkyl, or C₇-C₁₂ alkylaryl, R₅ is C₁-C₂₀ alkylene, 1≤a≤200;
Y₁ and Y₂ are the same or different, independently selected from the group consisting of C₁-C₂₀ alkyl, C₆-C₂₀ aryl, C₇-C₁₂ aralkyl, C₇-C₁₂ alkylaryl, and the following structure as shown in formula (1): 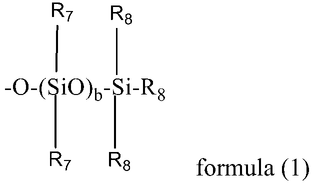
R₇ is independently selected from the group consisting of C₁-C₂₀ alkyl, C₆-C₂₀ aryl, C₇-C₁₂ aralkyl, and C₇-C₁₂ alkylaryl; R₈ is independently selected from the group consisting of C₁-C₂₀ alkyl, C₆-C₂₀ aryl, C₇-C₁₂ aralkyl, C₇-C₁₂ alkylaryl, C₁-C₂₀ alkoxy, and group R₉-O-R₁₀-, wherein R₉ is C₁-C₂₀ alkyl, C₆-C₂₀ aryl, C₇-C₁₂ aralkyl, or C₇-C₁₂ alkylaryl, R₁₀ is C₁-C₂₀ alkylene, 0≤b≤200;
b) a general formula of monomer II is as shown in formula II-1, formula II-2, or formula II-3:
CH₂=C(R₁)-G-(R₂O)_{q}-R₃ II-1
in formula II-1, R₁ represents a hydrogen atom, or methyl, each R₂ is independently C₁-C₆ alkylene, preferably R₂ is C₂-C₄ alkylene, q is an integer of 1 to 50, preferably q is an integer of 1 to 20; R₃ represents hydrogen atom, or C₁-C₂₀ alkyl, preferably R₃ represents hydrogen atom, or C₁-C₁₀ alkyl, more preferably hydrogen atom, or C₁-C₃ alkyl;
wherein, G is selected from the group consisting of groups as shown in G-1, and groups as shown in G-2,
-C(O)-O-B- G-1
-C(O)-N(R₄)-B- G-2
R₄ represents hydrogen atom or methyl, B is absent or B is C₁-C₂₀ alkylene, preferably B is absent or B is C₁-C₁₀ alkylene; 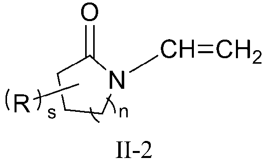
in formula II-2, n is an integer of 1 to 6, s is an integer of 0 to 16, each R is the same or different, independently selected from the group consisting of C₁-C₂₀ alkyl, preferably selected from the group consisting of C₁-C₁₀ alkyl, more preferably selected from the group consisting of C₁-C₆ alkyl;
CH₂=C(R₁)-C(O)-N(R₂R₃) II-3
in formula II-3, R₁ is selected from the group consisting of hydrogen atom, and C₁-C₂₀ alkyl, R₁ is preferably selected from the group consisting of hydrogen atom, and methyl;
R₂ and R₃ each are independently selected from the group consisting of hydrogen atom, and C₁-C₂₀ alkyl, R₂ and R₃ preferably are selected from the group consisting of hydrogen atom, and C₁-C₁₀ alkyl, more preferably, R₂ and R₃ are selected from the group consisting of hydrogen atom, and C₁-C₆ alkyl;
or R₂ and R₃, together with the nitrogen atom they are attached to, form C₃-C₈ heterocyclic group, preferably form pyrrolidone group, piperidinyl group, pyrrolidinyl group, pyrrolidinyl group, piperidinyl group, morpholinyl group, piperazinyl group, aziridinyl group, azetidine butyl group, azetidine heptyl group, or azetidine octyl group;
c) monomer III is a monomer having an anionic group and a polymerizable unsaturated group, wherein, the anionic group is a carboxyl group, or a sulfonic acid group.

2. The copolymer as claimed in claim 1, wherein:
M is shown in formula I-1:
CH₂=C(R₁)-X-B- I-1
in formula I-1, R₁ is selected from the group consisting of hydrogen atom, and C₁-C₂₀ alkyl; B is C₁-C₂₀ alkylene;
X is selected from the group consisting of the groups represented by X-1 and the groups represented by X-2,
-C(O)-O- X-1
-C(O)-N(R₂)- X-2
R₂ is selected from the group consisting of hydrogen atom, and C₁-C₂₀ alkyl; and/or
M is shown in formula I-2:
CH₂=C(R₁)-W-B- I-2
in formula I-2, R₁ is selected from the group consisting of hydrogen atom, and C₁-C₂₀ alkyl;
W is selected from the group consisting of the groups represented by W-1, W-2, W-3, and W-4, 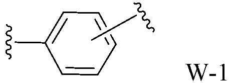
-O-C(O)-N(R₂)- W-2
-O-C(O)-O- W-3
-O-C(O)-O-D-N(R₂)- W-4
R₂ is selected from the group consisting of hydrogen atom, and C₁-C₂₀ alkyl, D is C₁-C₂₀ alkylene; when W is selected from the group consisting of W-1, B is absent or B is C₁-C₂₀ alkylene, when W is selected from the group consisting of W-2, W-3, and W-4, B is C₁-C₂₀ alkylene; and/or
M is shown in formula I-3: 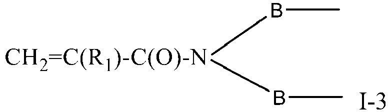
in formula I-3, R₁ is selected from the group consisting of hydrogen atom, and C₁-C₂₀ alkyl, B is independently C₁-C₂₀ alkylene.

3. The copolymer as claimed in claim 1 or 2, wherein the copolymer comprises or does not comprise a repeating unit generated by monomer IV, wherein monomer IV is one or more selected from dimethylaminoethyl (meth)acrylate, dimethylamino propyl (meth)acrylate, diethylaminoethyl (meth)acrylate, diethylamino propyl (meth)acrylate, N-tert-butylaminoethyl (meth)acrylate, dimethylaminoethyl (meth)acrylamide, diethylaminoethyl (meth)acrylamide, dipropylaminoethyl (meth)acrylamide, dimethylamino propyl (meth)acrylamide, diethylamino propyl (meth)acrylamide, or dipropylamino propyl (meth)acrylamide,
preferably, a general formula of monomer IV is as shown in formula IV:
CH₂=C(R₁)-P-B-N(R₃R₄) IV
in formula IV, P is selected from the group consisting of the groups represented by P-1 and P-2,
-C(O)-O- P-1
-C(O)-N(R₂)- P-2
B is C₁-C₂₀ alkylene; R₁ and R₂ are independently hydrogen atom, or C₁-C₂₀ alkyl; R₃ and R₄ are independently hydrogen atom, C₁-C₁₈ alkyl, hydroxyethyl, or benzyl, or R₃ and R₄ are jointed and, together with the nitrogen atom, form a morpholino group, a piperidino group, or a pyrrolidino group.

4. The copolymer as claimed in any one of claims 1 to 3, wherein:
a mass content of the repeating unit generated by monomer I in the copolymer is 30% to 90%, preferably 40% to 80%, more preferably 45% to 70%; and/or
a mass content of the repeating unit generated by monomer II in the copolymer is 5% to 65%, preferably 10% to 50%, more preferably15% to 45%; and/or
a mass content of the repeating unit generated by monomer **III** in the copolymer is 0.5% to 30% in the copolymer, preferably 3% to 15%, more preferably 5% to 10%.

5. The copolymer as claimed in any one of claims 1 to 4, wherein,
monomer I comprises silicon monomer I-A and/or silicon monomer I-B;
silicon monomer I-A has the same general formula as formula **I,** and satisfies the condition that when a is 1, Y₁ and/or Y₂ is of the structure of formula (1), and when a is lager than 1 and ≤200, at least one Y₁ is of the structure of formula (1) and/or at least one Y₂ is of the structure of formula (1);
silicon monomer I-B has the general formula as formula I, and satisfies the condition that Y₁ and Y₂ are the same or different, and independently selected from the group consisting of C₁-C₂₀ alkyl, C₆-C₂₀ aryl, C₇-C₁₂ aralkyl, and C₇-C₁₂ alkylaryl.

6. The copolymer as claimed in any one of claims 1 to 5, wherein,
in formula I-1, R₁ is selected from the group consisting of hydrogen atom, and C₁-C₁₀ alkyl, preferably R₁ is selected from the group consisting of hydrogen atom, and methyl; B is C₁-C₁₀ alkylene, preferably, B is C₁-C₆ alkylene; in X, R₂ is selected from the group consisting of hydrogen atom, and C₁-C₁₀ alkyl, preferably R₂ is selected from the group consisting of hydrogen atom, and methyl;
in formula I-2, R₁ is selected from the group consisting of hydrogen atom, and C₁-C₁₀ alkyl, preferably, R₁ and R₂ are selected from the group consisting of hydrogen atom, and methyl, B and D are C₁-C₁₀ alkylene, preferably, B and D are C₁-C₆ alkylene;
in formula I-3, R₁ is selected from the group consisting of hydrogen atom, and C₁-C₁₀ alkyl, preferably R₁ is selected from the group consisting of hydrogen atom, and methyl; B is C₁-C₁₀ alkylene;
in group Z, each R₃ is independently C₁-C₁₀ alkyl, C₆-C₁₀ aryl, C₇-C₁₂ aralkyl, C₇-C₁₂ alkylaryl, C₁-C₁₀ alkoxy, or group R₄-O-R₅-, R₄ is C₁-C₁₀ alkyl, C₆-C₁₀ aryl, C₇-C₁₂ aralkyl, or C₇-C₁₂ alkylaryl, R₅ is C₁-C₁₀ alkylene, 1≤a≤100; each R₇ is independently C₁-C₁₀ alkyl, C₆-C₁₀ aryl, C₇-C₁₂ aralkyl, or C₇-C₁₂ alkylaryl; each R₈ is independently C₁-C₁₀ alkyl, C₆-C₁₀ aryl, C₇-C₁₂ aralkyl, C₇-C₁₂ alkylaryl, C₁-C₁₀ alkoxy, or group R₉-O-R₁₀-, wherein R₉ is C₁-C₁₀ alkyl, C₆-C₁₀ aryl, C₇-C₁₂ aralkyl, or C₇-C₁₂ alkylaryl, R₁₀ is C₁-C₁₀ alkylene, and 0≤b≤100.

7. The copolymer as claimed in any one of claims 1 to 6, wherein, Z is selected from the group consisting of the following structures:
each Z is independently one or more selected from the group consisting of the following structures i-1 to i-6: 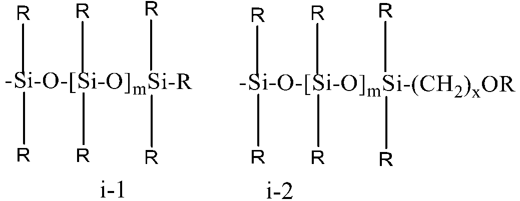 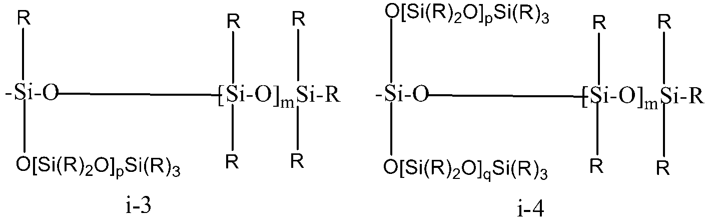 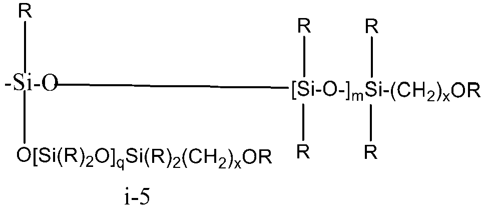 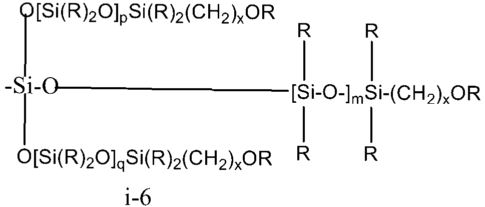
Z is preferably selected from the group consisting of 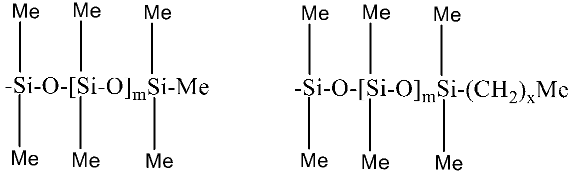 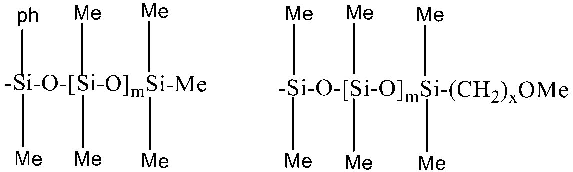 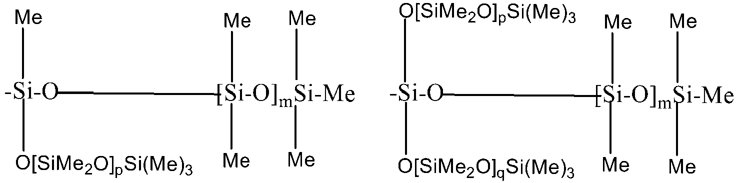 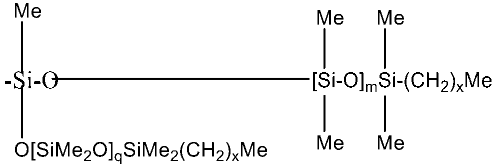 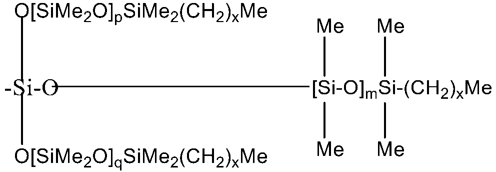 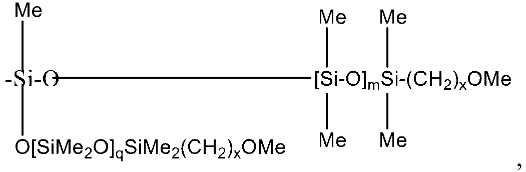 and 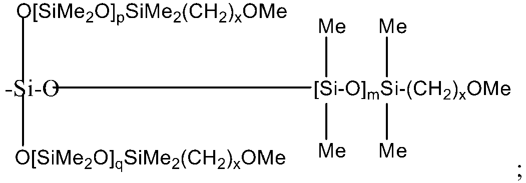
each R is independently one or more selected from the group consisting of C₁-C₁₀ alkyl, C₆-C₁₀ aryl, C₇-C₁₂ aralkyl, and C₇-C₁₂ alkylaryl;
Me represents methyl, ph represents phenyl; 1≤m+1≤60, preferably, 1≤m+1≤30; 0≤p≤60, preferably, 0≤p≤30; 0≤q≤60, preferably, 0≤q≤30; 1≤x≤9, preferably, 1≤x≤7, each x can be the same or different.

8. The copolymer as claimed in any one of claims 1 to 7, wherein, monomer I is selected from the group consisting of
CH₂=C(CH₃)C(O)-O-(CH₂)₃Si(OSi(CH₃)₃)₃;
CH₂=CHC(O)-O-(CH₂)₃Si(OSi(CH₃)₃)₃;
CH₂=C(CH₃)C(O)-O-(CH₂)₃Si(CH₃)(OSi(CH₃)₃)₂;
CH₂=CHC(O)-O-(CH₂)₃Si(CH₃)(OSi(CH₃)₃)₂;
CH₂=C(CH₃)C(O)-NH-(CH₂)₃Si(OSi(CH₃)₃)₃;
CH₂=CHC(O)-NH-(CH₂)₃Si(OSi(CH₃)₃)₃;
CH₂=C(CH₃)C(O)-NH-(CH₂)₃Si(CH₃)(OSi(CH₃)₃)₂;
CH₂=CHC(O)-NH-(CH₂)₃Si(CH₃)(OSi(CH₃)₃)₂;
CH₂=C(CH₃)C(O)-O-(CH₂)₃Si(OSi(CH₂CH₃)₃)₃;
CH₂=CHC(O)-O-(CH₂)₃Si(OSi(CH₂CH₃)₃)₃;
CH₂=C(CH₃)C(O)-O-CH₂-Si(OSi(CH₃)₃)₃;
CH₂=C(CH₃)C(O)-O-(CH₂)₃Si(CH₃)[O-[Si(CH₃)₂O]n-Si(CH₃)₂C₄H₉]₂, 0≤n≤25;
CH₂=C(CH₃)C(O)-O-(CH₂)₃[Si(CH₃)₂O]n-Si(CH₃)₂C₄H₉, 1≤n≤25;
CH₂=C(CH₃)C(O)-O-(CH₂)_{3[}Si(CH₃)₂0]n-Si(CH₃)₂C₈H_{I7}, 1≤n≤25;
CH₂=C(CH₃)C(O)-O-(CH₂)₃[Si(CH₃)₂O]n-Si(CH₃)₃, 1≤n≤25;
CH₂=CH-ph-Si(OSi(CH₃)₃)₃ (ph represents 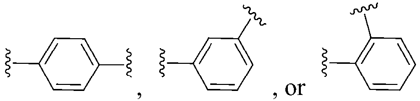 );
CH₂=CH-ph-(CH₂)₂Si(OSi(CH₃)₃)₃ (ph represents 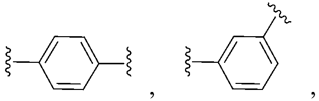 or 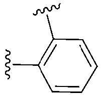 ); CH₂=CH-ph-(CH₂)₃[Si(CH₃)₂O]n-Si(CH₃)₂C₄H₉ (C₄H₉ represents butyl, ph represents 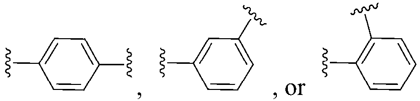 ), 1≤n≤25;
CH₂=CH-O-C(O)-NH-(CH₂)₃Si(OSi(CH₃)₃)₃;
CH₂=CH-O-C(O)-NH-(CH₂)₃-[Si(CH₃)₂O]n-Si(CH₃)₂C₄H₉(C₄H₉ represents butyl), 1≤n≤25;
CH₂=CH-O-C(O)-O-(CH₂)₃-Si(OSi(CH₃)₃)₃;
CH₂=CH-O-C(O)-O-(CH₂)₃-[Si(CH₃)₂O]n-Si(CH₃)₂C₄H₉(C₄H₉ represents butyl), 1≤n≤25;
CH₂=CH-O-C(O)-O-(CH₂)₂-NH-(CH₂)₃Si(OSi(CH₃)₃)₃;
CH₂=CH-O-C(O)-O-(CH₂)₂-NH-(CH₂)₃[Si(CH₃)₂O]n-Si(CH₃)₂C₄H₉(C₄H₉ represents butyl), 1≤n≤25;
CH₂=CH-C(O)-N[-(CH₂)₃-Si(OSi(CH₃)₃)₃]₂;
CH₂=CH-C(O)-N[-(CH₂)₃-Si(CH₃)(OSi(CH₃)₃)₂]₂;
CH₂=CH-C(O)-N[-(CH₂)₃-(Si(CH₃)₂O)ₙ-Si(CH₃)₂C₄H₉]₂(C₄H₉ represents butyl), 1≤n≤25; and
CH₂=C(CH₃)-C(O)-N[-(CH₂)₃-(Si(CH₃)₂O)ₙ-Si(CH₃)₂C₄H₉]₂(C₄H₉ represents butyl), 1≤n≤25.

9. The copolymer as claimed in any one of claims 1 to 8, wherein,
monomer II is one or more selected from the group consisting of 2-hydroxyethyl methacrylate, 2-hydroxypropyl methacrylate, 2-hydroxybutyl methacrylate, 4-hydroxybutyl methacrylate, poly(ethylene glycol) mono(meth)acrylate, poly(propylene glycol) mono(meth)acrylate, and methoxypolyethylene glycol (methyl) acrylate; and/or
monomer II is one or more selected from the group consisting of N-vinyl-2-pyrrolidone, N-vinyl-3-methyl-2-pyrrolidone, N-vinyl-4-methyl-2-pyrrolidone, N-vinyl-5-methyl-2-pyrrolidone, N-vinyl-3,3-dimethyl-2-pyrrolidone, N-vinyl-5-ethyl-2-pyrrolidone, N-vinyl-3-ethylpyrrolidone, N-vinyl-4,5-dimethyl pyrrolidone, N-vinyl-5,5-dimethyl pyrrolidone, N-vinyl-3,3,5-trimethylpyrrolidone, N-vinyl-5-methyl-5-ethylpyrrolidone, N-vinyl-3,4,5-trimethyl-3-ethylpyrrolidone, N-vinyl-5-ethyl-2-pyrrolidone, N-vinyl-3-ethylpyrrolidone, N-vinyl-4,5-dimethyl pyrrolidone, N-vinyl-5,5-dimethyl pyrrolidone, N-vinyl-3,3,5-trimethylpyrrolidone, N-vinyl-5-methyl-5-ethylpyrrolidone, N-vinyl-3,4,5-trimethyl-3-ethylpyrrolidone, N-vinyl-2-piperidone, N-vinyl-3-methylpiperidone, N-vinyl-3-methylcaprolactam, N-vinyl-4-methylpiperidone, N-vinyl-4-methylcaprolactam, N-vinyl-4-methylpiperidone, N-vinyl-6-methyl-2-piperidone, N-vinyl-6-ethyl-2-piperidone, N-vinyl-3,5-dimethyl-2-piperidone, N-vinyl-4,4-dimethyl-2-piperidone, N-vinyl-2-caprolactam, N-vinyl-7-methyl caprolactam, N-vinyl-7-ethyl caprolactam, N-vinyl-3,5-dimethyl caprolactam, N-vinyl-4,6-dimethyl caprolactam, N-vinyl-3,5,7-trimethyl caprolactam, N-vinyl-2-valerolactam, N-vinylhexahydro-2-azacycloheptanone, N-vinyloctahydro-2-azacyclooctanone, N-vinyloctahydro-2-azacyclononanone, and N-vinyldecahydro-2-azacyclodecanone; and/or
monomer II is selected from the group consisting of acrylamide, methyl acrylamide, N-methyl acrylamide, N-ethyl acrylamide, N-propyl acrylamide, N-isopropyl acrylamide, N-butyl acrylamide, N-methyl methyl acrylamide, N-ethyl methyl acrylamide, N-propyl methyl acrylamide, N-isopropyl methyl acrylamide, N,N-dimethyl(methyl) acrylamide, N,N-diethyl(methyl) acrylamide, N,N-diisopropyl(methyl) acrylamide, N-butyl methyl acrylamide, N-(methyl)acroloylpyrrolidone, N-(methyl)acroloylpiperidine, N-(methyl)acryloylpyrrolidine, N-(methyl)acryloylpyrrole, N-(methyl)acroloylpiperidone, N-(methyl)acroloylmorpholine, N-(methyl)acryloyl piperazine, N-(methyl)acroloylaziridine, N-(methyl)acroloylazetidine, N-(methyl)acroloyl azacycloheptane, and N-(methyl)acroloyl azacyclooctane; and/or
monomer III is selected from the group consisting of (methyl)acrylic acid, crotonic acid, maleic acid, fumaric acid, itaconic acid, citraconic acid, 2-acrylamide-2-methyl propanesulfonic acid, vinylsulfonic acid, (meth)allylsulfonic acid, styrenesulfonic acid, vinylbenzenesulfonic acid, acrylamide tertiary butyl sulfoacid, and salts thereof.

10. A composition or a treatment agent comprising the copolymer as claimed in any one of claims 1 to 9 and a solvent, wherein the solvent comprises water and/or an organic solvent,
preferably, the organic solvent is one or more of acetone, methyl ethyl ketone, 4-methyl-2-pentanone, ethyl acetate, butyl acetate, N-methyl-2-pyrrolidone, N,N-dimethylformamide, ethanol, isopropanol, n-propanol, butylcarbitol, dipropylene glycol methyl ether.

11. A preparation method of the composition or treatment agent of claim 10, comprising steps of:
(1) polymerizing monomers in an organic solvent, to obtain a copolymer solution;
(2) optionally, adding water to the copolymer solution for dispersion, and then removing the organic solvent, or alternatively, removing the solvent firstly and then adding water for dispersion;
(3) optionally, adding an alkali to the copolymer solution for converting a carboxyl group or sulfonic acid group in the copolymer into a carboxylate salt or a sulfonate salt.

12. Use of the copolymer as claimed in any one of claims 1 to 9, or the composition or treatment agent as claimed in claim 10, or the composition or treatment agent prepared by the method of claim 11 in fiber fabrics, leather, non-woven fabrics, asbestos, fur, concrete, natural stone, paper products, or plastics.

13. A water-repellent and oil-repellent product comprising a product and the copolymer as claimed in any one of claims 1 to 9, or the composition or treatment agent as claimed in claim 10, or the composition or treatment agent prepared by the method of claim 11, the product is fiber fabrics, leather, non-woven fabrics, asbestos, fur, concrete, natural stone, paper products, or plastics,
preferably, the copolymer as claimed in any one of claims 1 to 9, or the composition or treatment agent as claimed in claim 10, or the composition or treatment agent prepared by the method of claim 11 is attached to a surface or an interior of the product.

14. A method for treating a product, comprising step of contacting the product with the copolymer as claimed in any one of claims 1 to 9, or the composition or treatment agent as claimed in claim 10, or the composition or treatment agent prepared by the method of claim 11, the product is fiber fabrics, leather, non-woven fabrics, asbestos, fur, concrete, natural stone, paper products, or plastics;
preferably, the step of contacting is achieved by a surface sizing process, a surface coating process, a wet-end sizing process, or a soaking treatment process.
